# EUROPEAN PATENT APPLICATION

(11) **EP 0 594 934 A2**
(43) Date of publication of application: **04.05.1994**
(21) Application number: 93106074.3
(22) Date of filing: 14.04.1993
(51) Int. Cl.: A22C 17/04, A22C 21/00

(54) **Poultry leg boning apparatus**

(30) Priority: 28.10.1992 JP 311095/92
(71) Applicant: GORDEX CORPORATION, Isehara-shi, Kanagawa-ken (JP); FOODCRAFT EQUIPMENT COMPANY, INC., Lancaster Pennsylvania 17601 (US)
(72) Inventor: Sekiguchi, Mitsuaki, Isehara-shi, Kanagawa-ken (JP)
(74) Representative: Grünecker, Kinkeldey, Stockmair & Schwanhäusser Anwaltssozietät

(57) **Abstract**

A poultry leg boning apparatus for removing meat from the upper (51) and lower (52) leg bones of a poultry leg includes a transferring machine (A) for transferring a poultry leg, a cutting machine (B) for cutting open the meat of the poultry leg along one side of the upper leg bone and the lower leg bone, a separating machine (C) for cutting the knee joint (54) of the poultry leg apart thereby separating the upper leg bone (51) from the lower leg bone (52), a plucking machine (D) for pulling up the upper leg bone at the knee joint and plucking out the upper leg bone from the meat of the poultry leg, a peeling machine (E) for peeling the meat off the poultry leg along the lower leg bone toward the knee joint so that the meat is connected to the knee joint only by meat-to-bone connecting tendon tissues, and a tendon cutting machine (F) for cutting the meat-to-bone connecting tendon tissues to be able to remove the lower leg bone from the poultry leg.

## Description

### BACKGROUND OF THE INVENTION

The present invention relates to a poultry leg boning apparatus for removing meat from poultry legs.

When the meat is manually removed from a poultry leg, the boning work is carried out with a knife in accordance with the following steps:
(1) cutting the meat of the leg along the upper and lower leg bones;
(2) cutting the knee joint so as to separate the upper leg bone from the lower leg bone;
(3) pulling up the upper leg bone at its lower end or the knee joint and plucking out the upper leg bone from the leg meat;
(4) peeling the meat off the leg along the lower leg bone toward the knee joint so that the meat is connected to the knee joint only by meat-to-bone connecting tendon tissues; and
(5) cutting the meat-to-bone connecting tendon tissues so as to be able to remove the lower leg bone from the leg meat.

The above steps of the manual boning process require skill and physical stamina so that it has been desirable to automate these steps.

Various types of machines and methods for removing the meat from a poultry leg have been proposed. For example, U.S. Pat. No. 2,897,536 of Bergstrom et al, dated Aug. 4, 1959, discloses a machine wherein the leg is passed through a space between a pair of rotating rollers so that the meat is removed from the leg. U.S. Pat. No. 3,261,054 of Kaplan et al, dated July 19, 1966, discloses a machine wherein the leg is passed through a space between a pair of stripper bars so that the meat is removed from the leg. U.S. Pat. No. 3,965,535 of Kaplan et al, dated June 29, 1976, discloses a machine wherein the leg is passed through a space between a pair of rotating discs having closely spaced opposing peripheral stripping edges so that the meat is removed from the leg. U.S. Pat. No. 3,348,261 of Segur, dated Oct. 24, 1967, discloses a method wherein the meat of the leg is sliced along at least one side of the leg bone, and thereafter the meat is plowed in opposite directions along the upper leg bone and the lower leg bone toward the knee joint. By means of the above machines and methods, the meat of the leg is forced along the leg bone until it is removed therefrom. Thus, because of excessive deformation caused during the boning process, the meat, especially the meat of the upper leg portion, is likely to be damaged more seriously than in the case where the meat is manually processed. Japanese Patent Publication No. 60-23810, dated June 10, 1985 discloses a boning machine having a rotating annular cutter belt. When this machine is used, the meat between the forwarding run of the cutter belt and the returning run of the cutter belt is left on the leg bone, so that the yield rate of the meat removed from the leg is lower than that removed by the manual separation process.

### SUMMARY OF THE INVENTION

An object of the present invention is to provide a poultry leg boning apparatus wherein the above steps (1) to (5) in the manual boning process are automated .

According to the present invention, there is provided a poultry leg boning apparatus for removing meat from the upper and lower leg bones of a poultry leg, which apparatus comprises a transferring machine for transferring poultry legs, a cutting machine for cutting open the meat of the poultry leg along one side of the upper leg bone and the lower leg bone, a separating machine for cutting the knee joint of the poultry leg apart thereby separating the upper leg bone from the lower leg bone, a plucking machine for pulling up the upper leg bone at the knee joint and plucking out the upper leg bone from the meat of the poultry leg, a peeling machine for peeling the meat off the poultry leg along the lower leg bone toward the knee joint so that the meat is connected to the knee joint only by meat-to-bone connecting tendon tissues, and a tendon cutting machine for cutting the meat-to-bone connecting tendon tissues to be able to remove the lower leg bone from the poultry leg.

The transferring machine includes first clamping means for clamping the ankle of the leg while allowing the leg to rotate around the ankle. The first clamping means has a first clamping member having a groove and a second clamping member disposed adjacent to the first clamping member. The second clamping member is provided with a cutout facing the groove of the first clamping member. The breadth of the cutout is smaller than that of the groove of the first clamping member. The first clamping means further includes means for rotating the first clamping member relative to the second clamping member between a first position wherein the open end of the groove of the first clamping member is directed in the same direction as the open end of the cutout of the second clamping member and a second position wherein the open end of the groove of the first clamping member is directed at right angles to the open end of the cutout of the second clamping member. The transferring machine further includes first driving means for horizontally moving the first clamping means.

The cutting machine includes first supporting means for supporting the leg. Meat cutting means is provided for cutting open the meat of the leg. The meat cutting means has a first cutting blade having a wedge-shaped horizontal cross section and a vertical cutting edge, a second cutting blade abutting against a first side of the cutting edge of the first cutting blade and slightly protruding from the cutting edge of the first cutting blade, and second driving means for reciprocating the second cutting blade in the vertical direction relative to the first cutting blade. The cutting machine further includes first biasing means for biasing the leg against a second side of the cutting edge of the first cutting blade, third driving means for moving the meat cutting means in the vertical direction into and out of engagement with the meat of the leg, and fourth driving means for horizontally moving the meat cutting means. The cutting machine lastly includes restricting means for restricting rotation of the meat cutting means around a vertical axis when a force directed to the cutting edge of the first cutting blade is smaller than a predetermined magnitude, and permitting the rotation of the meat cutting means around the vertical axis when a force directed to the cutting edge of the first cutting blade is larger than the predetermined magnitude. The restricting means has a vertical shaft member fixed to the meat cutting means, which shaft member is offset in a direction at right angles to the direction of the horizontal movement of the meat cutting means relative to the first and the second cutting blades, spring means for applying a predetermined initial moment to the meat cutting means, thereby driving the meat cutting means rotationally around the vertical axis of the shaft member, and stopper means for restricting the rotation of the meat cutting means by the initial moment.

The separating machine includes a third cutting blade a cutting edge of which is sharp at one end portion thereof and dull at the other end portion thereof and which blade swings around the other end portion, second supporting means for supporting the knee joint of the leg, which means extends below and parallel to the third cutting blade, and bending means which engages with the upper leg bone so as to bend it downward.

The plucking machine includes a plow member which has a fork shaped tip, fifth driving means for moving the plow member downward and obliquely so as to engage the fork shaped tip with the knee joint of the leg, and swinging means for swinging the plow member which is engaged with the knee joint downward.

The peeling machine includes ankle cutting means for annularly cutting the meat around the ankle of the leg. The ankle cutting means has a pair of rotating fourth circular cutting blades biased to come close to one another and sixth driving means for moving the fourth cutting blades in the vertical direction so as to both engage the fourth cutting blades with the ankle of the leg and disengage the fourth cutting blades from the ankle of the leg. The peeling machine includes a pair of fifth cutting blades each of which has a cutout. The cutouts are opposed to one another. The peeling machine further includes seventh driving means for moving the fifth cutting blades close to one another, and eighth driving means for moving the fifth cutting blades reciprocally along the lower leg bone.

The tendon cutting machine includes tendon cutting means for cutting meat-to-bone connecting tendon tissues. The tendon cutting means has a sixth rigid annular cutting blade having an annular cutting edge and a side away from the cutting edge and ninth driving means for rotating the sixth cutting blade around a central axis. The tendon cutting machine further includes second clamping means for clamping the lower leg bone, which second clamping means is disposed apart from the sixth cutting blade toward the side of the cutting edge of the sixth cutting blade, transferring means for transferring the leg from the first clamping means to the second clamping means, and tenth driving means for moving the second clamping means both close to and apart from the sixth cutting blade. The tendon cutting machine further includes third clamping means for clamping the ankle of the leg, which clamping means is disposed coaxially with the central axis of the sixth cutting blade, and apart from the sixth cutting blade toward the side away from the cutting edge of the sixth cutting blade, eleventh driving means for moving the third clamping means both close to and apart from the sixth cutting blade, and second biasing means for biasing the knee joint of the leg against the cutting edge of the sixth cutting blade.

According to a preferred embodiment of the present invention, the poultry leg boning apparatus further comprises guiding means for guiding the first cutting blade and the second cutting blade so as to engage them with the leg at a predetermined portion of the leg.

According to another preferred embodiment of the present invention, the poultry leg boning apparatus further comprises means for revolving the third cutting blade.

According to still another preferred embodiment of the present invention, the poultry leg boning apparatus further comprises twelfth driving means for moving the second supporting means parallel to the third cutting blade.

According to one more preferred embodiment of the present invention, the poultry leg boning apparatus further comprises means for aligning the knee joint of the poultry leg substantially with the cutting edge of the third cutting blade, which means has a pair of rotating conical rollers so disposed that their slanted sides are opposed to one another.

According to yet another preferred embodiment of the present invention, the poultry leg boning apparatus further comprises means for moving the pair of fifth cutting blades downward close to the lower leg bone adjacent to the ankle.

According to still one more preferred embodiment of the present invention, the poultry leg boning apparatus further comprises third supporting means for supporting the leg, which supporting means can be engaged with the pair of fifth cutting blades and rotated by the fifth cutting blades.

Further objects, features and advantages of the present invention will become apparent from the Detailed Description of the Preferred Embodiments when read in conjunction with the accompanying drawings.

### BRIEF DESCRIPTION OF THE DRAWINGS

In the drawings:
Figure 1 is a perspective view showing a transferring machine A and a cutting machine B which define a part of a poultry leg boning apparatus in accordance with a preferred embodiment of the present invention;
Figure 2 is an enlarged detailed view of cutting blades of a cutter assembly of the cutting machine B;
Figure 3 is a perspective view showing a biasing roll assembly of the cutting machine B;
Figure 4 is a perspective view showing a cutter guide of the cutting machine B;
Figure 5 is an end view taken along a line V in Figure 4;
Figures 6A∼ 6D are plan views showing the operation of the cutting machine B;
Figure 7 is a perspective view showing a separating machine C which defines a part of the poultry leg boning apparatus in accordance with a preferred embodiment of the present invention;
Figure 8 is a sectional view showing the operation of the separating machine C;
Figure 9 is a perspective view showing a variation of the separating machine C;
Figure 10 is a sectional view showing the operation of the separating machine C of Figure 9;
Figure 11 is a perspective view showing a plucking machine D which defines a part of the poultry leg boning apparatus in accordance with a preferred embodiment of the present invention;
Figure 12 is a perspective view showing a peeling machine E which defines a part of the poultry leg boning apparatus in accordance with a preferred embodiment of the present invention;
Figure 13 is a perspective view showing an ankle cutter of the peeling machine E;
Figure 14 is a side view showing the operation of the peeling machine E;
Figure 15 is a perspective view showing the operation of the peeling machine E;
Figure 16 is a perspective view showing a tendon cutting machine F which defines a part of the poultry leg boning apparatus in accordance with a preferred embodiment of the present invention;
Figure 17 is a front view showing the operation of a setting arm assembly of the tendon cutting machine F;
Figure 18 is a side view showing the operation of the setting arm assembly of the tendon cutting machine F;
Figure 19 is a perspective view showing a cutter assembly and a clamp assembly of the tendon cutting machine F;
Figure 20 is a cross-sectional view showing the construction of the cutter assembly of the tendon cutting machine F; and
Figures 21A ∼ 21C are perspective views showing the operation of the tendon cutting machine F.

### DETAILED DESCRIPTION OF THE PREFERRED EMBODIMENTS

A poultry leg boning apparatus in accordance with the preferred embodiment of the present invention comprises a transferring machine A for transferring poultry legs, a cutting machine B for cutting open the meat of the poultry leg along one side of the upper leg bone and the lower leg bone, a separating machine C for cutting the knee joint of the poultry leg apart thereby separating the upper leg bone from the lower leg bone, a plucking machine D for pulling up the upper leg bone at the knee joint and plucking out the upper leg bone from the meat of the poultry leg, a peeling machine E for peeling the meat off the poultry leg along the lower leg bone toward the knee joint so that the meat is connected to the knee joint only by meat-to-bone connecting tendon tissues, and a tendon cutting machine F for cutting the meat-to-bone connecting tendon tissues to be able to remove the lower leg bone from the poultry leg.

In the poultry leg boning apparatus, the steps (1) to (5) in the manual boning process are carried out automatically by the machines B to F respectively. The transfer of the poultry leg between the machines is carried out automatically by the transferring machine A.

The machines A to F will be described in detail as follows.

### Transferring Machine A

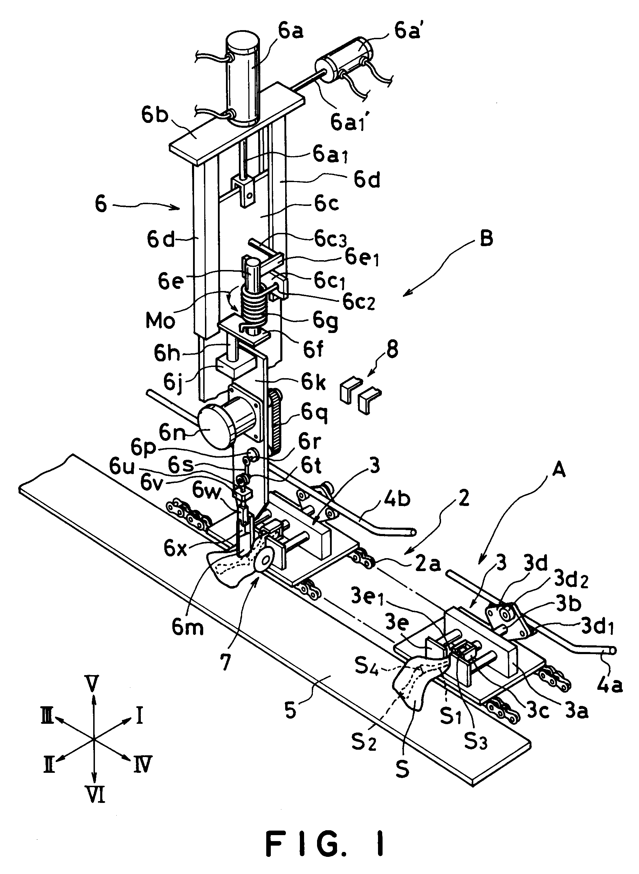

The transferring machine A will be described with reference to Figure 1. In the following descriptions, the directions indicated by arrows I , II , III , IV , V and VI in Figure 1 are referred to as the forward direction, rearward direction, leftward direction, rightward direction, upward direction and downward direction, respectively. Moreover, in the following descriptions, the direction parallel to the arrows I , II is referred to as the longitudinal direction, the direction parallel to the arrows III , IV is referred to as the transverse direction, and the direction parallel to the arrows V , VI is referred to as the vertical direction, respectively.

In Figure 1, 2 is an endless chain driven by a motor which is not shown for the sake of simplicity. An upper run 2a of the endless chain 2 is driven leftward.

As shown in Figure 1, the endless chain 2 has a plurality of clamp assemblies 3 for clamping poultry legs. The assemblies 3 are fixed to the chain 2 at a predetermined distance from one another.

Each of the clamp assemblies 3 includes a body 3a which is fixed to the endless chain 2 by suitable connecting means. A shaft 3b extends in the longitudinal direction through the body 3a. The shaft 3b is supported by the body 3a so that it can rotate around its longitudinal axis but can not move in the longitudinal direction. The shaft 3b fits in a bore formed in the body 3a rotatably but tightly so that the shaft 3b rotates only when a large torque is applied to it. A first clamping member 3c is fixed to the rear end of the shaft 3b. The first clamping member 3c comprises a channel bar having a U-shaped groove extending in the longitudinal direction and closed at its front end.

A cam plate 3d is fixed to the front end of the shaft 3b. The cam plate 3d is provided with a pair of cam rollers 3d₁ on its front surface and a pair of cam rollers 3d₂ on its rear surface. The cam rollers 3d₂ are disposed at right angles to the pair of cam rollers 3d₁ . The pair of cam rollers 3d₁ engage a line cam 4a which is disposed in front of and above a right end portion or the beginning portion of the upper run 2a of the endless chain 2 and fixed to a frame (not illustrated for the sake of simplicity) of a cutting machine B. The line cam 4a extends in the transverse direction. When the pair of cam rollers 3d₁ engage the line cam 4a, the open end of the U-shaped groove of the first clamping member 3c is directed upward. Hereinafter, the condition wherein the open end of the U-shaped groove of the first clamping member 3c is directed upward, is referred to as the open condition of the clamp assembly 3.

The line cam 4a exists only in the vicinity of the beginning portion and end portion of the upper run 2a of the endless chain 2. A line cam 4b is disposed in front of and above the upper run 2a of the endless chain 2 and is fixed to the frame of the cutting machine B. The line cam 4b extends in the transverse direction. The line cam 4b engages the pair of cam rollers 3d₂. When the line cam 4b engages the pair of cam rollers 3d₂, the open end of the U-shaped groove of the first clamping member 3c is directed rightward. Hereinafter, the condition wherein the open end of the U-shaped groove of the first clamping member 3c is directed rightward, is referred to as the closed condition of the clamp assembly 3.

A second clamping member 3e is disposed to the rear of the body 3a. The second clamping member 3e is provided with a U-shaped cutout 3e₁ having an open upper end. The U-shaped cutout 3e₁ is aligned with the U-shaped groove of the first clamping member 3c in the open condition of the clamp assembly 3. The width of the U-shaped cutout 3e₁ of the second clamping member 3e is a little smaller than the width of the U-shaped groove of the first clamping member 3c.

### Cutting Machine B

The cutting machine B will be described with reference to Figures 1 to 6. The cutting machine B described as follows is so constructed as to be able to cut open right legs of poultry.

In the following descriptions, the directions indicated by arrows I , II , III , IV , V and VI in Figure 1 are referred to as the forward direction, rearward direction, leftward direction, rightward direction, upward direction and downward direction, respectively. Moreover, in the following descriptions, the direction parallel to the arrows I , II is referred to as the longitudinal direction, the direction parallel to the arrows III , IV is referred to as the transverse direction, and the direction parallel to the arrows V , VI is referred to as the vertical direction, respectively.

As shown in Figure 1, a rectangular table 5 is disposed to the rear of the clamp assembly 3. The rectangular table 5 extends horizontally and in the transverse direction. The rectangular table 5 is fixed to the frame of the cutting machine B.

As shown in Figure 1, a cutter assembly 6 is disposed in the vicinity of the right end of the line cam 4b and above the clamp assembly 3.

The cutter assembly 6 has an air cylinder 6a which is directed in the vertical direction. The air cylinder 6a is fixed to a bracket 6b which is supported to be movable only in the longitudinal direction by the frame of the cutting machine B. An air cylinder 6a' is directed in the longitudinal direction and fixed to the frame of the cutting machine B. A piston 6a₁' of the air cylinder 6a' is connected to the bracket 6b. The lower end of a piston 6a₁ of the air cylinder 6a is fixed to the upper end of a rectangular cutter base 6c. The cutter base 6c is supported to be movable in the vertical direction by guides 6d which are fixed to the bracket 6b.

A rotation shaft 6e disposed to the right of the cutter base 6c and extending in the vertical direction is rotatably supported around its vertical axis by two bearings fixed to the cutter base 6c. The two bearings are not illustrated for the sake of simplicity.

A coil spring 6g fits on the rotation shaft 6e. One end of the coil spring 6g engages a hole 6c₂ formed at the right end of an eye plate 6c₁. The eye plate 6c₁ is fixed to the cutter base 6c and extends rightward. The other end of the coil spring 6g is fixed to a plate member 6f which is in turn fixed to the lower end of the rotation shaft 6e.

The coil spring 6g applies an initial moment M₀ to the rotation shaft 6e so as to drive the rotation shaft 6e rotationally in the direction indicated by a double arrow, or counterclockwise, as viewed from above.

An arm 6e₁ is fixed to the upper end of the rotation shaft 6e. The arm 6e₁ abuts against a stopper 6c₃ which is fixed to the cutter base 6c and extends rightward, thereby preventing the rotation shaft 6e from rotating in the direction indicated by the double arrow.

The upper end of a connection shaft 6h is fixed to the lower surface of the plate member 6f. The lower end of the connection shaft 6h is fixed to a connection bracket 6j. The connection shaft 6h is offset to the left relative to the rotation shaft 6e.

The upper end of a cutter body 6k is fixed to the connection bracket 6j. The cutter body 6k is offset forward relative to the connection shaft 6h. The cutter body 6k comprises a rectangular plate and is provided with a fixed cutting blade 6m at its lower end.

As shown in Figure 2, the fixed cutting blade 6m comprises an upper portion 6m₁ made of a rectangular plate, and a lower portion 6m₂. The lower portion 6m₂ has a wedge shaped configuration in horizontal cross section and extends rearward from the lower end of the upper portion 6m₁. The front surface of the upper portion 6m₁ is fixed to the rear surface of the cutter body 6k. The wedge shaped horizontal sectional configuration of the lower portion 6m₂ is so formed that the rear portion thereof is thinner than the front portion, and the maximum thickness of the front portion is substantially one half of the width of the upper portion 6m₁. The lower portion 6m₂ is offset to the right relative to the centerline of the upper portion 6m₁. The lower edge of the lower portion 6m₂ inclines downward from its front end to its rear end, so that the rear edge of the lower edge of the lower portion 6m₂ forms a sharp tip 6m₂' .

As shown in Figure 1, a motor 6n is mounted on the cutter body 6k. A shaft 6p extends through the cutter body 6k below the motor 6n, and is rotatably supported around its longitudinal axis by the cutter body 6k. The shaft 6p is connected to the output shaft of the motor 6n by a belt 6q. A pin 6r is eccentrically fixed to the rear end of the shaft 6p and extends rearward. A rod 6s is rotatably supported by the rear end portion of the pin 6r around the longitudinal axis of the pin 6r and extends downward. A pin 6t is rotatably supported around its longitudinal axis by the lower end portion of the rod 6s and extends rearward. A rod 6u is rotatably supported by the pin 6t around the longitudinal axis of the pin 6t and extends downward. The rod 6u is supported, movably in the vertical direction, by a guide 6v fixed to the cutter body 6k. A block 6w is fixed to the lower end of the rod 6u.

As shown in Figure 2, the upper end of a movable cutting blade 6x, made of a thin rectangular plate, fits within a slit in the block 6w. The slit is formed on the lower surface of the block 6w and extends in the longitudinal direction. The movable cutting blade 6x is fixed to the block 6w by means of a pin 6y. The block 6w is so located that its front surface abuts against the rear surface of the upper portion 6m₁ of the fixed cutting blade 6m. The movable cutting blade 6x is so located as to abut against the left side surface of the lower portion 6m₂ of the fixed cutting blade 6m. The left side surface of the lower portion 6m₂ defines the rear edge of the lower portion 6m₂ or a cutting edge 6m₃. The movable cutting blade 6x is also so located as to protrude at its rear edge 6x₁ slightly rearward from the cutting edge 6m₃. The lower edge of the movable cutting blade 6x is sharpened to form a sharp cutting edge 6x₃, and is made to incline downward from a front end 6x₂ thereof to the rear end 6x₁ thereof so that the rear edge of the lower edge of the movable cutting blade 6x forms a sharp tip 6x' . The movable cutting blade 6x is also so located that the cutting edge 6x₃ protrudes slightly downward from the lower edge of the lower portion 6m₂ of the fixed cutting blade 6m when the movable cutting blade 6x is at the lowest position.

When the initial moment M₀ is applied to the rotation shaft 6e, the shaft 6e is driven rotationally in the direction indicated by the double arrow until the arm 6e₁ abuts against the stopper 6c₃. Then, the rotation of the shaft 6e is stopped and the shaft 6e is held at this rotational position. In this condition, the movable cutting blade 6x is disposed to the left rear of the rotation shaft 6e, and inclined slightly rightward from the front edge 6x₂ to the rear edge 6x₁ as viewed from above. Also in this condition, the right side surface of the lower portion 6m₂ of the fixed cutting blade 6m, which right side surface defines the cutting edge 6m₃, extends in the longitudinal direction.

Hereinafter, what is referred to as the initial rotational condition of the movable cutting blade 6x is the condition in which an initial moment M₀ is applied to the rotation shaft 6e so as to drive the shaft 6e rotationally in the direction indicated by the double arrow. In the initial rotational condition, the arm 6e₁ abuts against the stopper 6c₃, thereby preventing the rotation shaft 6e from rotating in the direction indicated by the double arrow, the movable cutting blade 6x is disposed to the left rear of the rotation shaft 6e, the movable cutting blade 6x inclines slightly rightward from the front edge 6x₂ to the rear edge 6x₁ as viewed from above, and the right side surface of the lower portion 6m₂ of the fixed cutting blade 6m extends in the longitudinal direction.

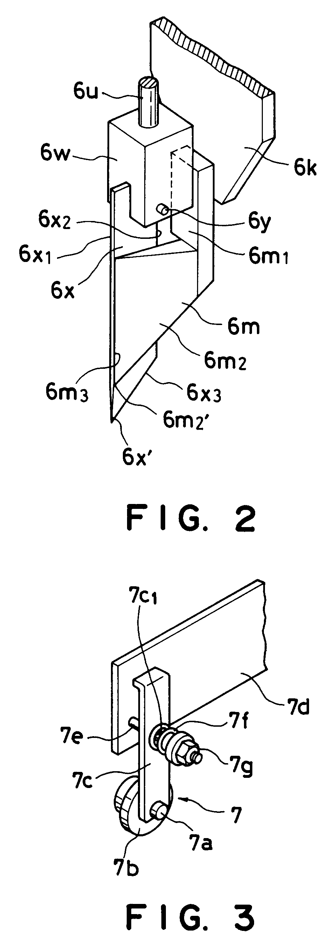

As shown in Figure 1, a biasing roll assembly 7 is disposed to the right of the fixed cutting blade 6m. As shown in Figure 3, the biasing roll assembly 7 has a biasing roll 7b rotatably supported by a shaft 7a which extends in the transverse direction. The shaft 7a is fixed to the lower end portion of an upwardly-extending rectangular plate 7c. The upper end of the plate 7c is bent leftward and fixed to the rear end portion of a bracket 7d. The front end portion of the bracket 7d extends upward and is fixed to the cutter base 6c at its upper end portion. A rod 7e extends in the transverse direction through a hole 7c₁ formed in the mid portion of the plate 7c. The left end of the rod 7e is fixed to the bracket 7d. The portion of the rod 7e located to the right of the plate 7c is fitted with a coil spring 7f. A nut 7g engages the right end portion of the rod 7e so as to apply a compressive force to the coil spring 7f.

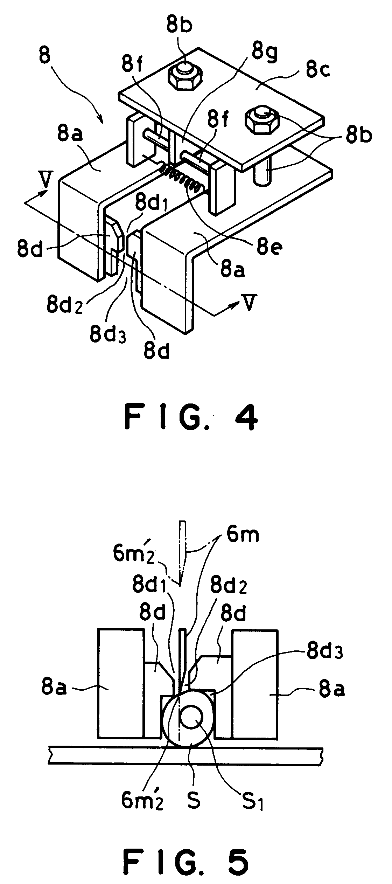

As shown in Figure 1, a cutter guide 8 is disposed in front of the cutter assembly 6 and above the clamp assembly 3. As shown in Figures 4 and 5, the cutter guide 8 is provided with a pair of L shaped legs 8a which are disposed adjacent to one another in the transverse direction. The respective rear portions of the legs 8a are bent downward.

A shaft 8b is fixed to the respective front portions of both of the legs 8a and extends upward. The shafts 8b are rotatably supported around their vertical axis by a base plate 8c. A guide plate 8d is fixed to the respective rear portions of both of the legs 8a. The guide plates 8d collaborate with one another so as to form a V shaped guide groove 8d₁, a slit 8d₂ which extends downward from the guide groove 8d₁, and a wide rectangular groove 8d₃ which is disposed below the slit 8d₂. The rectangular groove 8d₃ is offset to the right relative to the slit 8d₂. The legs 8a are biased by a spring 8e so that they rotate around the shafts 8b and come close to one another at their respective rear portions. Stoppers 8f fixed to the legs 8a abut against a receiver 8g fixed to the base plate 8c, thereby stopping the rotation of the legs 8a, which ensures the formation of the slit 8d₂. The cutter guide 8 is so located that the transverse position of the slit 8d₂ is the same as that of the fixed cutting blade 6m of the cutter assembly 6. The cutter guide 8 is driven in the longitudinal direction and in the vertical direction by a driving means which is not illustrated for the sake of simplicity.

The operation of the above constructed cutting machine B is described as follows.

An electric power supply of the boning apparatus is turned on, and the upper run 2a of the endless chain 2 moves leftward. The piston 6a₁ of the air cylinder 6a is at a retracted position so that the cutter body 6k is pulled up.

The piston 6a₁' of the air cylinder 6a' is at a retracted position so that the cutter body 6k is located above the clamp assembly 3. The initial moment M₀ is applied to the rotation shaft 6e so as to drive the rotation shaft 6e in the direction indicated by the double arrow in Figure 1. The arm 6e₁ is then abutted against the stopper 6c₃, thereby preventing the rotation shaft 6e from rotating in the direction indicated by the double arrow. The movable cutting blade 6x is located to the left rear of the rotation shaft 6e and is inclined slightly rightward from the front edge 6x₂ to the rear edge 6x₁ as viewed from above, and the right side surface of the lower portion 6m₂ of the fixed cutting blade 6m extends in the longitudinal direction. That is, the cutting blade 6x is in the initial rotational condition. The cutter guide 8 is located in front of the cutter assembly 6 and above the clamp assembly 3.

Then, as shown in Figure 1, a right leg S is set into the clamp assembly 3 by an operator, which assembly 3 is located in the vicinity of the right end of the upper run 2a of the endless chain 2. The clamp assembly 3 is in the open condition wherein the open end of the U-shaped groove of the first clamping member 3c is directed upward.

The right leg S is set into the clamp assembly 3 by the following procedure.
① The inner side surface of the leg S is directed leftward and the outer side surface of the leg S is directed rightward, and the connecting joint between a lower leg bone S₁ and an upper leg bone S₂ or the knee joint S₄ of the leg S is protruded upward.
② The lower end of the lower leg bone S₁ or the ankle S₃ of the leg S is inserted into the U-shaped groove of the first clamping member 3c, and the portion of the lower leg bone S₁ adjacent to the ankle S₃ is inserted into the U-shaped cutout 3e₁ of the second clamping member 3e.

Thus, the ankle S₃ of the leg S is clamped by the first clamping member 3c, and the portion of the lower leg bone S₁ adjacent to the ankle S₃ is clamped by the second clamping member 3e.

The leg S set into the clamp assembly 3 then moves leftward after the clamp assembly 3 has moved leftward, which assembly is driven by the upper run 2a of the endless chain 2. The leftward movement of the clamp assembly 3 causes the cam roller 3d₁ to be disengaged from the line cam 4a and the cam roller 3d₂ to be engaged with the line cam 4b. The first clamping member 3c rotates clockwise as viewed from the rear, so that the clamp assembly 3 is closed. After the rotation of the first clamping member 3c, the right leg S clamped by the first clamping member 3c also rotates clockwise as viewed from the rear, so that the inner side surface of the right leg S is directed upward and the outer side surface of the right leg S abuts against the upper surface of the table 5. Thereafter, the upper leg bone S₂, the lower leg bone S₁ and the ankle S₃ are all positioned in the same horizontal plane. As viewed from above, the lower leg bone S₁ inclines slightly rightward from its front end to its rear end, and the upper leg bone S₂ inclines slightly leftward from its front end to its rear end.

The open end of the U-shaped groove of the first clamping member 3c is directed rightward, and the open end of the U-shaped cutout 3e₁ of the second clamping member 3e is directed upward. Thus,the ankle S₃ of the leg S can not be released from the first clamping member 3c and the second clamping member 3e in either the vertical direction or the transverse direction. The ankle S₃ of the leg S can not go through the U-shaped cutout 3e₁ of the second clamping member 3e, the width of which is a little smaller than the width of the U-shaped groove of the first clamping member 3c, so that the ankle S₃ of the leg S can not be released from the clamping by the first clamping member 3c and the second clamping member 3e in the longitudinal direction also. The width of the U-shaped groove of the first clamping member 3c is larger than the width of the ankle S₃ of the leg S and the width of the U-shaped cutout 3e₁ of the second clamping member 3e is larger than the width of the portion of the lower leg bone S₁ adjacent to the ankle S₃, so that the leg S can rotate to some extent around the ankle S₃ in a horizontal plane.

After the clamp assembly 3 has been closed, the clamp assembly 3 is moved further leftward until the left end of the U-shaped cutout 3e₁ of the second clamping member 3e has come to the same transverse position as that of the movable cutting blade 6x or the fixed cutting blade 6m. Then, the movement of the endless chain 2 is stopped and the leftward movement of the clamp assembly 3 is also stopped. Thereafter, the cutter guide 8 moves rearward and downward so that the guide plates 8d are lowered to the rear of and close to the second clamping member 3e of the clamp assembly 3. Then, as shown in Figure 5, the portion of the lower leg bone S₁ adjacent to the ankle S₃ is received in the rectangular groove 8d₃ of the cutter guide 8.

The piston 6a₁ of the air cylinder 6a advances downward from the retracted position, and the motor 6n is started. After the advance of the piston 6a₁, the cutter base 6c or the cutter body 6k moves downward. After the downward movement of the cutter base 6c, the biasing roll assembly 7 or the biasing roll 7b also moves downward. After the motor 6n is started, the shaft 6p rotates via the belt 6q, the eccentric pin 6r rotates, and the rod 6u is reciprocated in the vertical direction via the rod 6s and the pin 6t, so that the movable cutting blade 6x is reciprocated in the vertical direction between its lowest and highest positions.

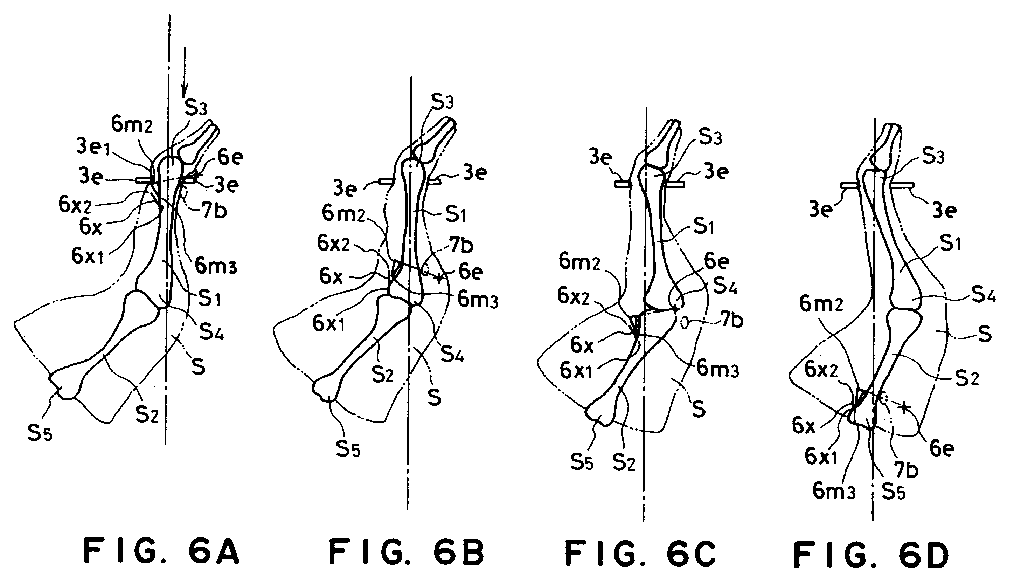

As shown in Figure 5, the sharp tip 6m₂' of the fixed cutting blade 6m, which has been moving downward, pierces into the meat of the leg S in the vicinity of the lower leg bone S₁ adjacent to the ankle S₃ due to the guidance of the guide groove 8d₁ and the slit 8d₂. As described above, the transverse position of the movable cutting blade 6x or the fixed cutting blade 6m is the same as that of the left end of the cutout 3e₁ of the second clamping member 3e and the lower leg bone S₁ is inclined slightly rightward from its front end to its rear end as viewed from above, so that, as shown in Figures 5 and 6A , the sharp tip 6m₂' of the fixed cutting blade 6m pierces into the leg S at the left of and close to the lower leg bone S₁.

The biasing roll 7b is abutted against the leg S at the right of the movable cutting blade 6x and at the right of the lower leg bone S₁ so as to bias the leg S leftward.

As a result, the leg S rotates clockwise, as viewed from above, around the ankle S₃. Thus, the lower leg bone S₁ is extended in the longitudinal direction and the sharp tip 6m₂ ' of the fixed cutting blade 6m is abutted against the left side surface of the lower leg bone S₁. When the sharp tip 6m₂ ' of the fixed cutting blade 6m has pierced into the meat of the leg S to the bone, the piston 6a₁ of the air cylinder 6a reaches the advanced position, and the sharp tip 6m₂' of the fixed cutting blade 6m is retained at this position.

The movable cutting blade 6x is in the initial rotational condition so that the right side surface of the lower portion 6m₂ of the fixed cutting blade 6m, which right side surface extends in the longitudinal direction, is abutted closely against the left side surface of the lower leg bone S₁ which extends in the longitudinal direction. The movable cutting blade 6x, which inclines slightly rightward from the front edge 6x₂ to the rear edge 6x₁ as viewed from above, is abutted at its rear edge 6x₁ against the left side surface of the lower leg bone S₁ extending in the longitudinal direction.

The piston 6a₁' of the air cylinder 6a' advances so that the cutter assembly 6 moves rearward. The movable cutting blade 6x reciprocates in the vertical direction due to the guidance of the left side surface of the lower portion 6m₂ of the fixed cutting blade 6m so as to cut open the meat of the leg S. The slender movable cutting blade 6x is abutted at its rear edge 6x₁ against the left side surface of the lower leg bone S₁, so that the meat of the leg S is cut open at a position adjacent to the left side surface of the lower leg bone S₁. The rear edge 6x₁ of the movable cutting blade 6x protrudes only slightly rearward from the cutting edge 6m₃ of the lower portion 6m₂ of the fixed cutting blade 6m, so that the movable cutting blade 6x neither cuts into nor chips off the lower leg bone S₁.

As the cutter assembly 6 is moved rearward, the meat of the leg S is cut open by the movable cutting blade 6x along the left side surface of the lower leg bone S₁ extending in the longitudinal direction. The opening made by the movable cutting blade 6x is further enlarged by the wedge shaped lower portion 6m₂ of the fixed cutting blade 6m.

When the meat of the leg S is cut open by the lower portion 6m₂, the meat applies forward resistant force to the cutting edge 6m₃ of the lower portion 6m₂. The movable cutting blade 6x and the fixed cutting blade 6m are offset leftward relative to the rotation shaft 6e, so that a resistant moment, directed opposite to the direction indicated by the double arrow in Figure 1 , is generated around the rotation shaft 6e by the forward resistant force applied to the cutting edge 6m₃. But, the forward resistant force is small because it is applied by the meat of the leg S, so that the resistant moment generated around the rotation shaft 6e does not exceed the initial moment M₀. Thus, the movable cutting blade 6x is retained in the initial rotational condition.

When the cutter assembly 6 is moved further rearward, as shown in Figure 6B, the right side surface of the lower portion 6m₂ of the fixed cutting blade 6m is abutted against the portion of the lower leg bone S₁ adjacent to the knee joint S₄. The left side surface of the portion of the lower leg bone S₁ adjacent to the knee joint S₄ is curved and inclines leftward from its front portion to its rear portion. The right side surface of the lower portion 6m₂ of the fixed cutting blade 6m, which extends in the longitudinal direction, inclines relative to the left side surface of the lower leg bone S₁.

Thus, the left side surface of the lower leg bone S₁ applies forward resistant force to the cutting edge 6m₃ of the lower portion 6m₂, which resistant force is larger than that applied by the meat of the leg S. Thus, a resistant moment which is larger than the initial moment M₀ is generated around the rotation shaft 6e by the forward resistant force applied by the left side surface of the lower leg bone S₁, so that the rotation shaft 6e rotates in the direction opposite to the direction indicated by the double arrow in Figure 1 or clockwise as viewed from above against the biasing force of the coil spring 6g.

Accordingly, the movable cutting blade 6x and the fixed cutting blade 6m rotate to move to a position to the left front of the rotation shaft 6e. The movable cutting blade 6x is inclined leftward from the front edge 6x₂ to the rear edge 6x₁ as viewed from above, and the right side surface of the lower portion 6m₂ of the fixed cutting blade 6m is inclined leftward from its front edge to its rear edge as viewed from above.

As a result, the right side surface of the lower portion 6m₂ of the fixed cutting blade 6m is once again abutted closely against the left side surface of the lower leg bone S₁ which left side surface inclines leftward from its front portion to its rear portion. Thus, the operation for cutting open the meat of the leg S along the left side surface of the lower leg bone S₁ is allowed to continue smoothly.

When the cutter assembly 6 moves rearward, the lower portion 6m₂ of the fixed cutting blade 6m applies a rightward force to the lower leg bone S₁, so that the leg S rotates around the ankle S₃ counterclockwise, as viewed in Figure 6B, which causes the portion of the lower leg bone S₁ adjacent to the knee joint S₄ to move rightward. This rightward movement allows the portion of the lower leg bone S₁ adjacent to the knee joint S₄ to go smoothly through the space between the lower portion 6m₂ of the fixed cutting blade 6m and the biasing roll 7b.

When the cutter assembly 6 moves further rearward, as shown in Figure 6C, the fixed cutting blade 6m passes by the portion of the lower leg bone S₁ adjacent to the knee joint S₄ . The cutting edge 6m₃ of the lower portion 6m₂ of the fixed cutting blade 6m passes by the curved portion of the lower leg bone S₁ adjacent to the knee joint S₄ to protrude into the meat in the vicinity of the knee joint S₄, so that the forward resistant force applied to the cutting edge 6m₃ decreases, which causes the resistant moment to decrease. Thus, the rotation shaft 6e rotates in the direction indicated by the double arrow in Figure 1 , in accordance with the biasing force of the spring 6g, which causes the movable cutting blade 6x and the fixed cutting blade 6m to rotate back to their intial rotational condition. As a result, the right side surface of the lower portion 6m₂ of the fixed cutting blade 6m abuts closely against the left side surface of the knee joint S₄, which allows the operation for cutting open the meat of the leg S along the left side surface of the knee joint S₄ to be continued smoothly.

The lower portion 6m₂ of the fixed cutting blade 6m applies a rightward force to the knee joint S₄, so that the leg S rotates around the ankle S₃ counterclockwise, as viewed in Figure 6C, which causes the knee joint S₄ to move rightward. The knee joint S₄ applies a rightward force to the biasing roll 7b, so that the biasing roll 7b moves rightward against the biasing force of the spring 7f, which enlarges the space between the lower portion 6m₂ of the fixed cutting blade 6m and the biasing roll 7b.

The aforementioned rightward movement of the knee joint S₄ and the enlarging of the space between the lower portion 6m₂ of the fixed cutting blade 6m and the biasing roll 7b allows the knee joint S₄ to go smoothly through the space between the lower portion 6m₂ of the fixed cutting blade 6m and the biasing roll 7b.

When the cutter assembly 6 moves further rearward, as shown in Figure 6D, the right side surface of the lower portion 6m₂ of the fixed cutting blade 6m is abutted against the upper leg bone S₂. The left side surface of the upper leg bone S₂ inclines leftward from its front portion to its rear portion, so that the right side surface of the lower portion 6m₂ of the fixed cutting blade 6m, which right side surface now extends in the longitudinal direction, inclines relative to the left side surface of the upper leg bone S₂. Thus, the left side surface of the upper leg bone S₂ applies forward resistant force to the cutting edge 6m₃ of the lower portion 6m₂. Thus, a resistant moment which is larger than the initial moment M₀ is generated around the rotation shaft 6e by the forward resistant force applied by the left side surface of the upper leg bone S₂, so that the rotation shaft 6e rotates in the direction opposite to the direction indicated by the double arrow in Figure 1, or clockwise as viewed from above, against the biasing force of the coil spring 6g.

Accordingly, the movable cutting blade 6x and the fixed cutting blade 6m rotate to move to a position to the left front of the rotation shaft 6e. The movable cutting blade 6x is inclined leftward from the front edge 6x₂ to the rear edge 6x₁ as viewed from above, and the right side surface of the lower portion 6m₂ of the fixed cutting blade 6m is inclined leftward from its front edge to its rear edge as viewed from above.

As a result, the right side surface of the lower portion 6m₂ of the fixed cutting blade 6m once again abuts closely against the left side surface of the upper leg bone S₂ which inclines leftward from its front portion to its rear portion as viewed from above. Thus, the operation for cutting open the meat of the leg S along the left side surface of the upper leg bone S₂ is allowed to continue smoothly. When the cutter assembly 6 moves rearward, the lower portion 6m₂ of the fixed cutting blade 6m applies a rightward force to the upper leg bone S₂, so that the leg S rotates around the ankle S₃ counterclockwise, as viewed in Figure 6D, which causes the upper leg bone S₂ to move rightward. This rightward movement allows the upper leg bone S₂ to go smoothly through the space between the lower portion 6m₂ of the fixed cutting blade 6m and the biasing roll 7b.

As in the case of the knee joint S₄, the operation for cutting open the meat of the leg S along the left side surface of a coxa S₅ is allowed to continue smoothly. Thus, the operation for cutting open the meat of the leg S along the lower leg bone S₁ and the upper leg bone S₂ is completed.

When the aforementioned operation for cutting open the meat of the leg S is completed, the piston 6a₁ of the air cylinder 6a and the piston 6a₁' of the air cylinder 6a' retract from the advanced position and the motor 6n stops. After the retraction of the piston 6a₁, the cutter base 6c or the cutter body 6k moves upward. Thus, the fixed cutting blade 6m and the movable cutting blade 6x move upward so that they are released from the leg S. After the stopping of the motor 6n, the movable cutting blade 6x stops reciprocating in the vertical direction. After the retraction of the piston 6a₁' , the cutter base 6c or the cutter body 6k moves forward and returns back to the position above the clamp assembly 3. The cutter guide 8 also moves forward and upward and is released from the leg S.

As described above, the right side surface of the lower portion 6m₂ of the fixed cutting blade 6m always abuts closely against the left side surfaces of the lower leg bone S₁ and the upper leg bone S₂. The movable cutting blade 6x, which is guided by the left side surface of the lower portion 6m₂ of the fixed cutting blade 6m, cuts open the meat of the leg S. The rear edge 6x₁ is always abutted against the left side surfaces of the lower leg bone S₁ and the upper leg bone S₂, so that the meat of the leg S is cut open along the lower leg bone S₁ and the upper leg bone S₂ so that no meat is left on the bones. The rear edge 6x₁ of the movable cutting blade 6x protrudes only slightly rearward from the cutting edge 6m₃ of the lower portion 6m₂ of the fixed cutting blade 6m, so that the movable cutting blade 6x neither cuts into nor chips off the bones.

After the completion of the operation for cutting open the meat of the leg S, the clamp assembly 3 restarts and moves further leftward, while being kept in the closed condition, until it reaches the separating machine C.

The cutting machine B for cutting open right legs of poultry has been described above. The cutting machine B, if the transverse arrangement of the members thereof is in reverse, can cut open left legs of poultry.

### Separating Machine C

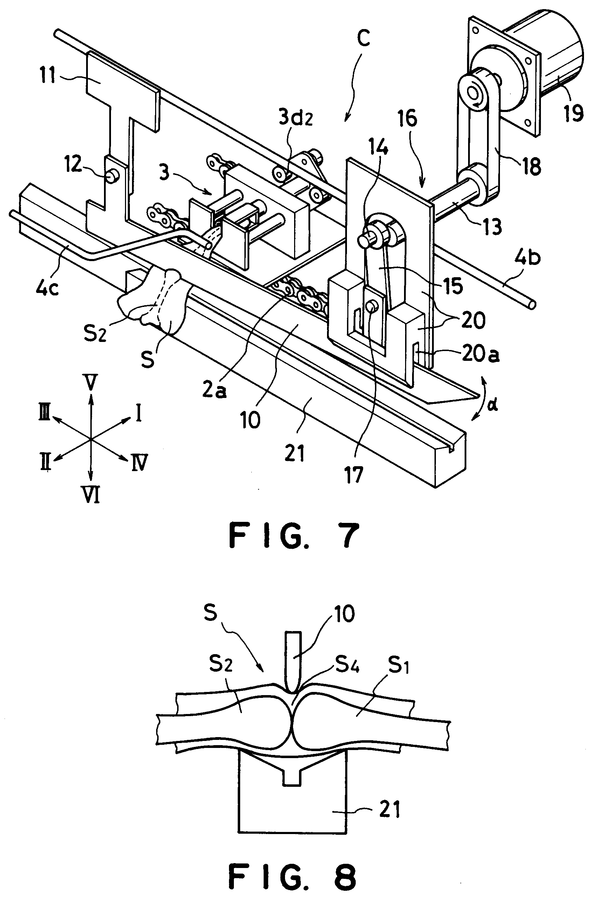

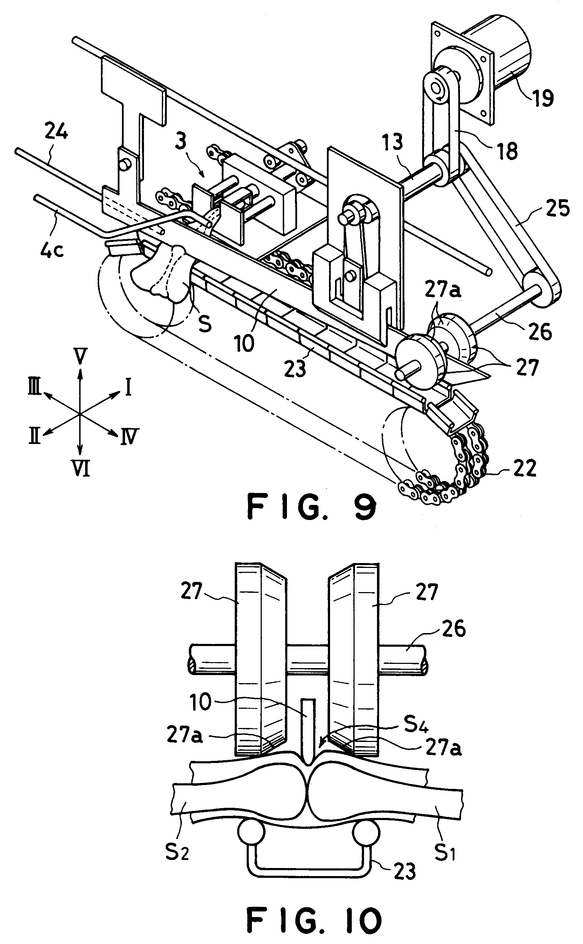

The separating machine C will be described with reference to Figures 7 to 10. In the following descriptions, the directions indicated by arrows I , II , III , IV , V and VI in Figures 7 and 9 are referred to as the forward direction, rearward direction, leftward direction, rightward direction, upward direction and downward direction, respectively. Moreover, in the following descriptions, the direction parallel to the arrows I , II is referred to as the longitudinal direction, the direction parallel to the arrows III , IV is referred to as the transverse direction, and the direction parallel to the arrows V , VI is referred to as the vertical direction, respectively.

A first embodiment of the separating machine C will be described with reference to Figures 7, 8.

A swinging cutter 10 is disposed to the rear of the clamp assembly 3. The swinging cutter 10 is so disposed that the cutting blade thereof is directed downward and extends parallel to the line cam 4b or in the transverse direction. A pin 12 is fixed to a bracket 11 which forms a part of the frame of the separating machine C. The pin 12 extends in the longitudinal direction. The frame of the separating machine C is not illustrated for the sake of simplicity. The swinging cutter 10 is supported by the pin 12 to be rotatable around the pin 12 and slightly movable in the vertical direction and in the transverse direction relative to the pin 12. A shaft 13 is disposed in the vicinity of the right end of the swinging cutter 10 and extends in the longitudinal direction. The shaft 13 is rotatably supported around its longitudinal axis by the frame of the separating machine C. An eccentric shaft 14 is fixed to the rear end of the shaft 13 to be eccentric to the longitudinal axis of the shaft 13 and extends in the longitudinal direction. An arm 15 is rotatably supported around the shaft 14 by the shaft 14. The shafts 13, 14 and the arm 15 define a cam mechanism 16.

A pin 17 is fixed to the arm 15 and extends in the longitudinal direction. The right end portion of the swinging cutter 10 is rotatably supported around the pin 17 by the pin 17. The shaft 13 of the cam mechanism 16 is rotated by a motor 19 through a belt 18. The motor 19 is fixed to the frame of the separating machine C. A guide bracket 20 is fixed to the frame of the separating machine C. A groove 20a is formed on the lower surface of the guide bracket 20 and extends in the transverse direction. The right end portion of the swinging cutter 10 fits in the groove 20a. The cutting edge of the swinging cutter 10 is dull at its right end portion and sharp at its left end portion. The swinging cutter 10 is so located that it inclines upward from its left end to its right end even when its right end is positioned in the lowest position due to the operation of the cam mechanism 16.

A supporting member 21 for supporting the knee joint of the leg S is disposed below the swinging cutter 10 and extends horizontally and in the transverse direction. The supporting member 21 is fixed to the frame of the separating machine C. The upper surface of the supporting member 21 has a shallow V-shaped cross section as viewed from the right. The intersecting line between the two slanting upper surfaces of the supporting member 21 is aligned with the cutting edge of the swinging cutter 10 in the vertical direction. The supporting member 21 extends leftward beyond the left end portion of the swinging cutter 10. The portion of the supporting member 21 extending leftward beyond the left end portion of the swinging cutter 10 lacks a rear half. A line cam 4c is disposed to the rear of the left end portion of the supporting member 21 and extends parallel to the supporting member 21 . The line cam 4c comprises a right end portion which is located above the supporting member 21, a left end portion which is located below the supporting member 21, and a middle portion which connects the right end portion with the left end portion.

The operation of the separating machine C will now be described as follows.

An electric supply of the boning apparatus is turned on. Then, the motor 19 is started and the swinging cutter 10 starts to swing around the pin 12 due to the operation of the cam mechanism 16. The motor 19 rotates clockwise, as viewed in Figure 7. The swinging cutter 10 is supported by the pin 12 to be rotatable around the pin 12 and slightly movable in the vertical direction and in the transverse direction relative to the pin 12. Thus, the swinging cutter 10 swings in the vertical direction around the pin 12 as indicated by the arrow α in Figure 7, and also revolves slightly clockwise, as viewed in Figure 7, around the pin 12.

After the upper run 2a of the endless chain 2 moves leftward, the clamp assembly 3 which is located in front of the swinging cutter 10 moves leftward. The cam rollers 3d₂ engage the line cam 4b so that the clamp assembly 3 is in the closed condition. The poultry leg S which is clamped by the clamp assembly 3 comes into a space between the swinging cutter 10 and the supporting member 21 from the right. The leg S moves leftward, while the knee joint S₄ is put on the V-shaped upper surface of the supporting member 21.

As shown in Figure 8, the right end portion of the swinging cutter 10, which cutter is swinging in the vertical direction, abuts against the knee joint S₄ in the vicinity of the connecting point between the lower leg bone S₁ and the upper leg bone S₂. The swinging cutter 10 inclines upward from its left end to its right end so that the cutting edge of the right end portion of the swinging cutter 10 is sufficiently apart from the upper surface of the supporting member 21 . Therefore, the cutting edge of the swinging cutter 10 lightly abuts against the knee joint S₄. As described above, the right end portion of the cutting edge of the swinging cutter 10 is dull. Thus, the right end portion of the cutting edge of the swinging cutter 10 does not deeply cut into the knee joint S₄ of the leg S.

The dull cutting edge of the swinging cutter 10 intermittently abuts against the leg S so as to finely adjust the position of the leg S in the longitudinal direction. Thus, the connecting point between the lower leg bone S₁ and the upper leg bone S₂ is finely aligned with the cutting edge of the swinging cutter 10 in the vertical direction.

The clamp assembly 3 moves further leftward so that the left end portion of the cutting edge of the swinging cutter 10 abuts against the leg S. The left end portion of the cutting edge of the swinging cutter 10 is close to the upper surface of the supporting member 21 and is sharp. Therefore, the cutting edge of the swinging cutter 10 cuts deeply into the knee joint S₄ so as to cut the connecting point between the lower leg bone S₁ and the upper leg bone S₂ apart. The swinging cutter 10 not only swings in the vertical direction but also revolves slightly clockwise, as viewed in Figure 7, so that it cuts into the knee joint S₄ while it moves leftward relative to the knee joint S₄. Thus, the swinging cutter easily cuts the knee joint S₄ apart so as to separate the upper leg bone S₂ from the lower leg bone S_{1.} There is a space between the cutting edge of the swinging cutter 10 and the upper surface of the supporting member 21 so that the swinging cutter 10 does not cut the meat enclosing the underside of the knee joint S₄ apart.

The clamp assembly 3 moves further leftward. Then, the upper leg bone S₂ which extends rearward beyond the supporting member 21 engages the middle portion of the line cam 4c. Thus, as the clamp assembly 3 moves leftward, the upper leg bone S₂ is bent downward by the line cam 4c.

Thus, the operation for separating the upper leg bone S₂ from the lower leg bone S₁ by the separating machine C is completed.

After the completion of the operation for separating the upper leg bone S₂ from the lower leg bone S₁, the clamp assembly 3 moves further leftward, while being kept in the closed condition, until it reaches the plucking machine D for plucking out the upper leg bone from the leg meat.

A second embodiment of the separating machine C will be described with reference to Figures 9, 10.

As shown in Figures 9, 10, an endless chain 22 is disposed below the swinging cutter 10. The upper run of the endless chain 22 extends horizontally over the length of the swinging cutter 10 and moves leftward synchronously with the leftward movement of the clamp assembly 3. A plurality of channel shaped supporting members 23 are continuously mounted on the endless chain 22. In this embodiment, the knee joint S₄ is set on the supporting members 23 between their side walls. In the first embodiment, the supporting member 21 applies a rightward resistant force to the knee joint S₄ so that the knee joint S₄ moves rightward relative to the clamp assembly 3 during the cutting operation. In the second embodiment, the supporting member 23 moves synchronously with the movement of the clamp assembly 3 so that the knee joint S₄ does not move rightward relative to the clamp assembly 3 during the cutting operation. In this embodiment, a supporting arm 24 is disposed in front of and parallel to the line cam 4c. While the leg S is being bent downward, it is supported by the supporting arm 24.

As shown in Figures 9, 10, a shaft 26 is disposed above the right end of the swinging cutter 10 and extends in the longitudinal direction. The shaft 26 is rotatably supported around its longitudinal axis by the frame of the separating machine C and rotated by the motor 19 through a belt 25. A pair of conical adjusting rollers 27 are fixed to the shaft 26, respective slanted flanks 27a thereof being opposed to one another. The swinging cutter 10 extends between the adjusting rollers 27.

In accordance with the above constitution, the leg S is firmly held by the pair of opposed slanted flanks 27a of the rotating adjusting rollers 27. Then, the leg S is driven by the rollers 27 into a space between the opposed slanted flanks 27a. Thus, the position of the leg S in the longitudinal direction is roughly adjusted so that the connecting point between the lower leg bone S₁ and the upper leg bone S₂ is roughly aligned with the cutting edge of the swinging cutter 10 in the vertical direction. Then, the right end portion of the cutting edge of the swinging cutter 10 abuts against the knee joint S₄ in the vicinity of the connecting point between the lower leg bone S₁ and the upper leg bone S₂ so as to finely adjust the position of the leg S in the longitudinal direction. Thus, the connecting point between the lower leg bone S₁ and the upper leg bone S₂ is finely aligned with the cutting edge of the swinging cutter 10. The rotating adjusting rollers 27 firmly hold the knee joint S₄ by the opposed slanted flanks 27a so as to adjust the position of the leg S in the longitudinal direction, so that the connecting point between the lower leg bone S₁ and the upper leg bone S₂ can be roughly aligned with the cutting edge of the swinging cutter 10 even if the leg S or the lower leg bone S₁ is a little too large or a little too small. As a result, even if there is a little variation in the length of the lower leg bone S₁, the right end portion of the cutting edge of the swinging cutter 10 can abut against the knee joint S₄ in the vicinity of the connecting point between the lower leg bone S₁ and the upper leg bone S₂, so that fine alignment of the connecting point between the lower leg bone S₁ and the upper leg bone S₂ with the cutting edge of the swinging cutter 10 is assured.

### Plucking machine D

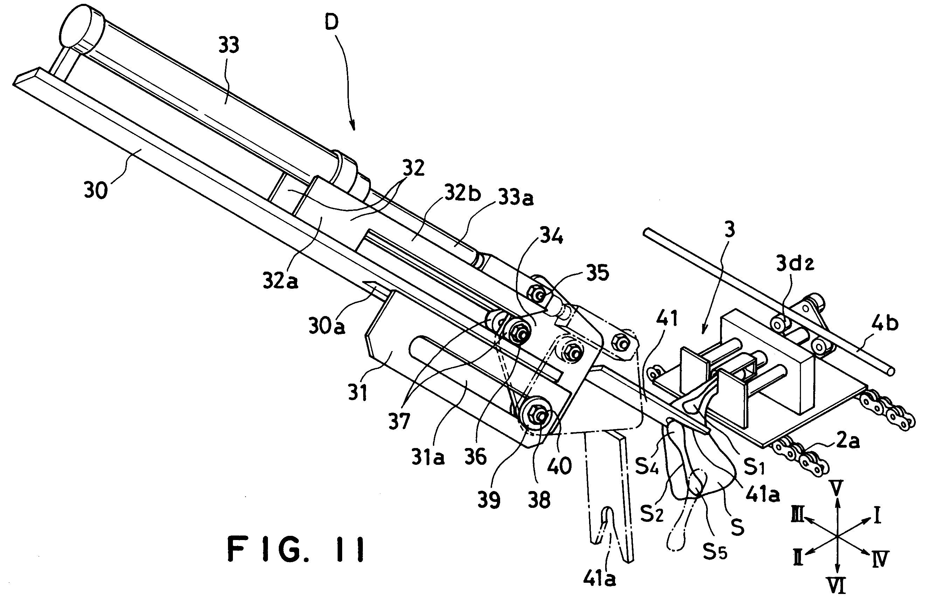

The plucking machine D will be described with reference to Figure 11. In the following descriptions, the directions indicated by arrows I , II , III , IV , V and VI in Figure 11 are referred to as the forward direction, rearward direction, leftward direction, rightward direction, upward direction and downward direction, respectively. Moreover, in the following descriptions, the direction parallel to the arrows I , II is referred to as the longitudinal direction, the direction parallel to the arrows III , IV is referred to as the transverse direction, and the direction parallel to the arrows V , VI is referred to as the vertical direction, respectively.

A base 30 of the plucking machine D is disposed to the rear of and above the clamp assembly 3. The base 30 inclines downward from its rear end to its front end. The base 30 is fixed to a frame of the plucking machine D. The frame of the plucking machine D is not illustrated for the sake of simplicity. A slit 30a is formed in the front portion of the base 30. The slit 30a extends in the longitudinal direction to reach the front end of the base 30. A guide bracket 31 is fixed to the under surface of the base 30 beside the slit 30a. The guide bracket 31 extends in the longitudinal direction parallel to the slit 30a. An oval hole 31a is formed in the guide bracket 31. The oval hole 31a extends in the longitudinal direction.

A pair of L shaped guide brackets 32 are fixed to the upper surface of the base 30. The guide brackets 32 are disposed on either side of the slit 30a and extend in the longitudinal direction. Shorter legs 32a of the brackets 32 are fixed at their ends to the base 30. Longer legs 32b of the brackets 32 are located above the upper surface of the base 30 and extend forward and downward parallel to the base 30. The front ends of the longer legs 32b are located to the rear of the front end of the base 30. An air cylinder 33 is mounted on the upper surface of the base 30.

A piston 33a of the air cylinder 33 extends forward and downward, parallel to the base 30, between the guide brackets 32. A rectangular plate 34 is connected to the front end of the piston 33a. The plate 34 is received in the slit 30a of the base 30.

The rear upper part of the plate 34 is connected to the front end of the piston 33a of the air cylinder 33 by a pin 35 extending in the transverse direction. The plate 34 can rotate around the pin 35. A pin 36 is fixed to the rear mid part of the plate 34 and extends in the transverse direction through the plate 34. The pin 36 is provided with a roller 37 at each end thereof. The rollers 37 can rotate around the pin 36. The rollers 37 are received in the spaces between the lower surfaces of the longer legs 32b of the guide brackets 32 and the upper surface of the base 30.

The side surfaces of the rollers 37 abut against the lower surfaces of the longer legs 32b of the guide brackets 32 and the upper surface of the base 30. A pin 38 is fixed to the front lower part of the plate 34 and extends in the transverse direction through the plate 34. The pin 38 engages the oval hole 31a of the guide bracket 31. A washer 39 and a nut 40 fit on respective ends of the pin 38 so as to maintain the engagement between the pin 38 and the oval hole 31a. A plow member 41 is fixed to the front end of the plate 34. A Y-shaped cutout 41a is formed in the front end of the plow member 41. The plow member 41 is extended forward and downward while the rollers 37 are received in the spaces between the lower surfaces of the longer legs 32b of the guide brackets 32 and the upper surface of the base 30.

The operation of the plucking machine D will be described as follows.

After the upper run 2a of the endless chain 2 has moved leftward, the clamp assembly 3 moves leftward. When the clamp assembly 3 comes in front of the plucking machine D, the leftward movement of the upper run 2a of the endless 2 chain is stopped so that the clamp assembly 3 stops its leftward movement. The cam rollers 3d₂ engage the line cam 4b so that the clamp assembly 3 is in the closed condition.

The piston 33a of the air cylinder 33 moves forward and downward from the retracted position to the advanced position, which causes a forward and downward movement of the plate 34. The rollers 37 move forward and downward in the spaces between the lower surfaces of the longer legs 32b of the guide brackets 32 and the upper surface of the base 30 while the side surfaces of the rollers 37 abut against the lower surfaces of the longer legs 32b of the guide brackets 32 and the upper surface of the base 30. The pin 38 moves forward and downward in the oval hole 31a of the guide bracket 31 while the engagement between the pin 38 and the oval hole 31a is maintained. The plow member 41 which is fixed to the front end of the plate 34 moves forward and downward while it is extended forward and downward.

When the pin 38 reaches the right end of the oval hole 31a of the guide bracket 31, the rollers 37 reach the right ends of the spaces between the lower surfaces of the longer legs 32b of the guide brackets 32 and the upper surface of the base 30. The plow member 41 reaches the poultry leg S so as to catch the knee joint S₄ or the connecting point between the lower leg bone S₁ and the upper leg bone S₂, which connecting point has already been cut apart by the separating machine C, in the Y-shaped cutout 41a.

The piston 33a moves further forward and downward, then the rollers 37 move forward beyond the front ends of the spaces between the lower surfaces of the longer legs 32b of the guide brackets 32 and the upper surface of the base 30. Then, as indicated by a phantom line in Figure 11, the plate 34 rotates clockwise around the pin 38, as viewed from the right. After the rotation of the plate 34, as indicated by the phantom line in Figure 11, the plow member 41 also rotates clockwise around the pin 38 as viewed from the right so as to pull up the upper leg bone S₂ at the knee joint S₄ and pluck out the upper leg bone S₂ from the leg meat toward the coxa S₅. Then, the upper leg bone S₂ is only connected to the leg meat at the coxa S₅ and hangs down from the leg S. As indicated by the phantom line in Figure 11, when the piston 33a of the air cylinder 33 reaches the advanced position, the plow member 41 is directed downward so that it is disengaged from the upper leg bone S₂.

Thus, the operation for the plucking out of the upper leg bone S₂ from the leg meat is completed. After the completion of the operation, the piston 33a of the air cylinder 33 retracts rearward and upward, the plate 34 rotates counterclockwise around the pin 38, the rollers 37 return into the spaces between the lower surfaces of the longer legs 32b of the guide brackets 32 and the upper surface of the base 30, and the plate 34 returns rearward and upward to its initial position. Then, the clamp assembly 3 is restarted and moves leftward, while being kept in the closed condition, until it reaches the peeling machine E.

### Peeling Machine E

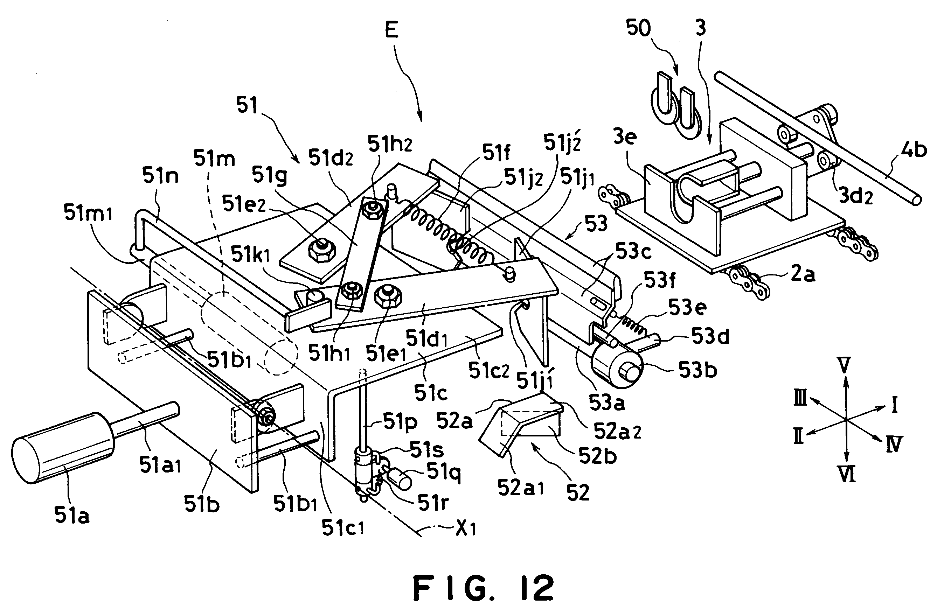

The peeling machine E will be described with reference to Figures 12 to 15. In the following descriptions, the directions indicated by arrows I , II , III , IV , V and VI in Figures 12 to 14 are referred to as the forward direction, rearward direction, leftward direction, rightward direction, upward direction and downward direction, respectively. Moreover, in the following descriptions, the direction parallel to the arrows I , II is referred to as the longitudinal direction, the direction parallel to the arrows III , IV is referred to as the transverse direction, and the direction parallel to the arrows V , VI is referred to as the vertical direction, respectively.

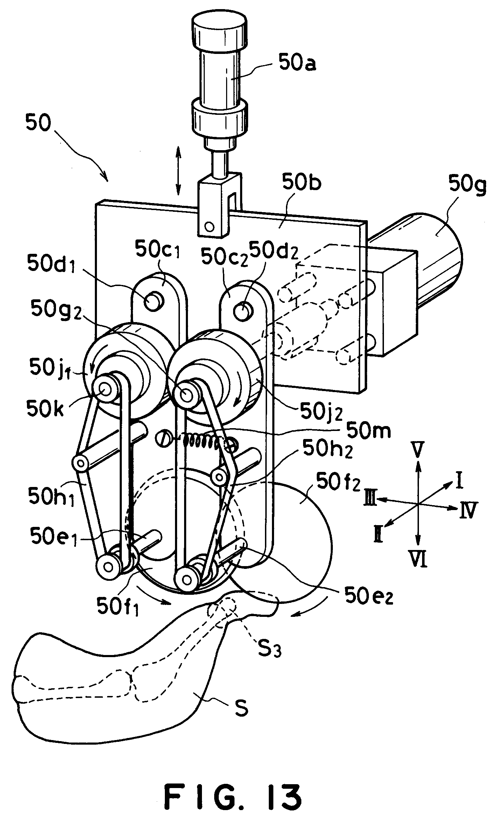

As shown in Figure 12, an ankle cutter 50 is provided to the rear of and above the clamp assembly 3. As shown in Figure 13, the ankle cutter 50 has an air cylinder 50a which is fixed to a frame of the peeling machine E and extends downward. The frame of the peeling machine E is not illustrated for the sake of simplicity. A base plate 50b is fixed to the piston of the air cylinder 50a. A pair of swinging arms 50c₁, 50c₂ are disposed adjacent to one another in the transverse direction. The swinging arms 50c₁, 50c₂ are connected to the rear surface of the base plate 50b by pins 50d₁, 50d₂ which extend in the longitudinal direction, respectively. The swinging arms 50c₁, 50c₂ can swing around the pins 50d₁, 50d₂, respectively. Pins 50e₁, 50e₂ extend through the lower ends of the swinging arms 50c₁, 50c₂, respectively. The pins 50e₁, 50e₂ are rotatably supported around their longitudinal axes by the swinging arms 50c₁, 50c₂, respectively.

Circular cutter blades 50f₁, 50f₂ are fixed to the front ends of the pins 50e₁, 50e₂, respectively. Cutting edges are formed on the peripheries of the cutter blades 50f₁, 50f₂. The cutter blades 50f₁, 50f₂ are located to the rear of but close, in the longitudinal direction, to the second clamping member 3e of the clamp assembly 3. A motor 50g is fixed to the front surface of the base plate 50b. An output shaft 50g₂ of the motor 50g extends rearward through the base plate 50b. The output shaft 50g₂ is located to the left of the swinging arm 50c₂. The rear end of the output shaft 50g₂ is connected to the pin 50e₂ through a belt 50h₂ for transmitting torque. A gear 50j₂ is fixed to the output shaft 50g₂ in the vicinity of the rear end of the output shaft 50g₂. A pin 50k is disposed to the right of the arm 50c₁ and extends in the longitudinal direction.

The pin 50k is rotatably connected around its longitudinal axis to the base plate 50b. A gear 50j₁ is fixed to the pin 50k. The gear 50j₁ meshes with the gear 50j₂. The rear end of the pin 50k is connected to the pin 50e₁ through a belt 50h₁ for transmitting torque. The arms 50c₁ and 50c₂ are biased by a spring 50m so that they are made to come close to one another at their lower ends. The arm 50c₂ abuts against the output shaft 50g₂ while the arm 50c₁ abuts against the pin 50k. Thus, the swinging motions of the arms 50c₁, 50c₂ whereby they are made to come close to one another are restricted. When the arm 50c₂ abuts against the output shaft 50g₂ and the arm 50c₁ abuts against the pin 50k, the cutter blade 50f₁ partially overlaps the cutter blade 50f₂, as shown in Figure 13.

As shown in Figure 12, a peeler assembly 51 is disposed to the rear of the ankle cutter 50. The peeler assembly 51 has an air cylinder 51a which is fixed to the frame of the peeling machine E and extends in the longitudinal direction. A pushing plate 51b is fixed to the front end of a piston 51a, of the air cylinder 51a. A base plate 51c is disposed in front of the pushing plate 51b. The base plate 51c has a L-shaped transverse section. A shorter leg 51c₁ of the base plate 51c is rotatably connected around an axis X₁ extending in the transverse direction to the pushing plate 51b. Stoppers 51b₁ which are fixed to the pushing plate 51b abut against the shorter leg 51c₁. When the stoppers 51b₁ abut against the shorter leg 51c₁, a longer leg 51c₂ of the base plate 51c extends horizontally. The base plate 51c can rotate, from the position indicated by a solid line in Figure 12 wherein the longer leg 51c₂ extends horizontally, around the axis X₁ counterclockwise as viewed from the right.

A pair of arms 51d₁, 51d₂ are disposed on the longer leg 51c₂ of the base plate 51c. The arms 51d₁, 51d₂ extend in the longitudinal direction. The arm 51d₁ is connected at its rear end portion to the base plate 51c by a pin 51e₁ which extends in the vertical direction. The arm 51d₁ can rotate around the pin 51e₁. The arm 51d₂ is connected at its rear end to the base plate 51c by a pin 51e₂ which extends in the vertical direction. The arm 51d₂ can rotate around the pin 51e₂. One end of a spring 51f is connected to the arm 51d₁ and the other end thereof is connected to the arm 51d₂. The arms 51d₁, 51d₂ are biased by the spring 51f so that their front ends are made to come close to one another. A link arm 51g is connected at its right end to the arm 51d₁ by a pin 51h₁ which is disposed to the rear of the pin 51e₁ and extends in the vertical direction. The link arm 51g can rotate around the pin 51h₁. The link arm 51g is connected at its left end to the arm 51d₂ by a pin 51h₂ which is disposed in front of the pin 51e₂ and extends in the vertical direction. The link arm 51g can rotate around the pin 51h₂.

Clamp plates 51j₁, 51j₂ are fixed to the front ends of the arms 51d₁, 51d₂, respectively. The clamp plates 51j₁, 51j₂ are provided at their side ends with V-shaped cutouts 51j₁ ' , 51j₂' , respectively which are opposed to one another. The V-shaped cutouts 51j₁ ' , 51j₂' include semicircular cutouts made at the apexes of the V-shapes. The peripheries of the cutouts 51j₁' , 51j₂' are sharpened to form cutting edges. A pin 51k₁ is fixed to the rear end of the arm 51d₁. An air cylinder 51m is fixed to the under surface of the longer leg 51c₂ of the base plate 51c and extends leftward. The piston 51m₁ of the air cylinder 51m engages the pin 51k₁ through a connecting member 51n. A shaft 51p is fixed to the rear under surface of the longer leg 51c₂ in the vicinity of the right end of the longer leg 51c₂ and extends downward. A guide roller 51q is rotatably connected around the shaft 51p to the lower end of the shaft 51p. The guide roller 51q is driven rotationally by a spring 51r around the shaft 51p clockwise as viewed from above. The rotation of the guide roller 51q is restricted by a stopper 51s. When the guide roller 51q abuts against the stopper 51s, the axis of the guide roller 51q extends in the transverse direction.

A guide member 52 is disposed in front of the guide roller 51q. The guide member 52 has a top plate 52a and supporting plate 52b for supporting the top plate 52a. The top plate 52a is constituted by a slanted portion 52a₁ which inclines upward from its rear end to its front end and a horizontal portion 52a₂ which extends forward from the front end of the slanted portion 52a₁. The supporting plate 52b inclines rightward from its rear end to its front end as viewed from above. The guide member 52 is fixed to the frame of the peeling machine E.

A leg support assembly 53 is disposed to the rear of the ankle cutter 50 and in front of the peeler assembly 51.

The leg support assembly 53 has a shaft 53a which extends in the transverse direction. The shaft 53a is rotatably supported around its own axis by a bearing 53b fixed to the frame of the peeling machine E. A supporting plate 53c is fixed to the shaft 53a. The supporting plate 53c is driven rotationally clockwise as viewed from the right by a spring 53e which connects the supporting plate 53c with a pin 53d fixed to the bearing 53b. The supporting plate 53c abuts against a stopper 53f fixed to the bearing 53b. Thus, the rotation of the supporting plate 53c is restricted. When the supporting plate 53c abuts against the stopper 53f, the plate 53c is extended upward.

The operation of the peeling machine E will now be described as follows.

After the upper run 2a of the endless chain 2 has moved leftward, the clamp assembly 3 moves leftward. When the clamp assembly 3 comes in front of the peeling machine E, the leftward movement of the upper run 2a of the endless chain 2 is stopped so that the clamp assembly 3 stops its leftward movement. The cam rollers 3d₂ engage the line cam 4b so that the clamp assembly 3 is in the closed condition.

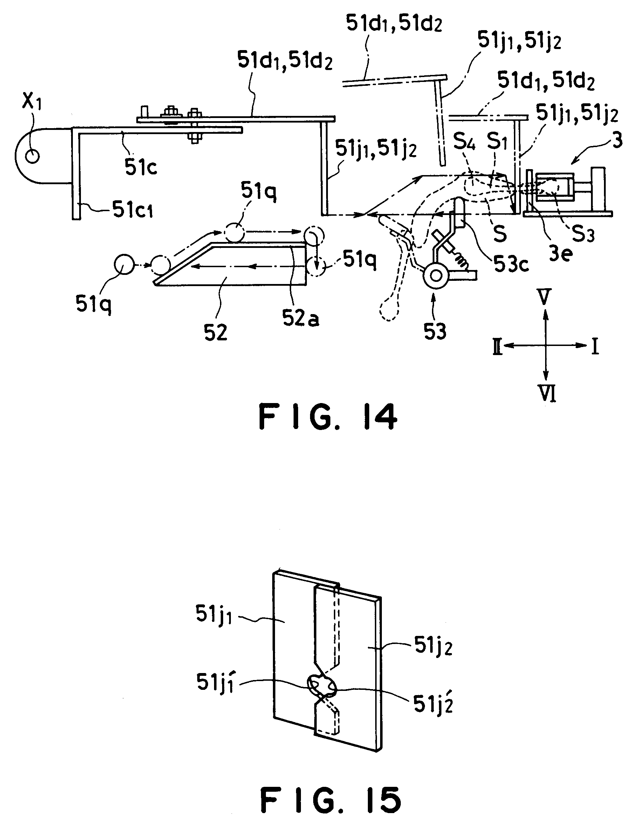

As shown in Figure 14, the leg S is supported by the supporting plate 53c so that the lower leg bone S₁ is extended substantially horizontally.

The motor 50g of the ankle cutter 50 is started and the cutter blades 50f₁, 50f₂ rotate. The piston of the air cylinder 50a moves downward from the retracted position to the advanced position. After the downward movement of the piston of the air cylinder 50a, the base plate 50b or the cutter blades 50f₁, 50f₂ move downward. As shown in Figure 13, the cutter blades 50f₁, 50f₂ abut against the ankle S₃ of the leg S and begin to cut the meat around the ankle S₃.

As the cutter blades 50f₁, 50f₂ move downward, the ankle S₃ applies a horizontal force to the cutter blades 50f₁, 50f₂. Thus, against the biasing force of the spring 50m, the arms 50c₁, 50c₂ swing so that their lower ends move away from one another so that the transverse distance between the cutter blades 50f₁, 50f₂ becomes larger. Therefore, the cutter blades 50f₁, 50f₂ annularly cut the meat around the ankle S₃ apart while catching the ankle S₃ between them. After the meat around the ankle S₃ has been annularly cut apart, the motor 50g stops and the piston of the air cylinder 50a moves upward from the advanced position to the retracted position. Thus, the ankle cutter 50 is released from the ankle S₃ and returns back to the retracted position above the clamp assembly 3.

The piston 51a₁ of the air cylinder 51a of the peeler assembly 51 moves forward to the advanced position so that the base plate 51c moves forward from the retracted position indicated by a solid line in Figures 12, 14. When the base plate 51c starts to move forward, the piston 51m₁ of the air cylinder 51m is at the advanced position, so that the pin 51k₁ which engages with the piston 51m₁ through the connecting member 51n is at the leftmost position. Thus, against the biasing force of the spring 51f, the arms 51d₁, 51d₂ are at the rotational positions wherein the front ends of the arms 51d₁, 51d₂ are apart from one another so that the clamp plates 51j₁, 51j₂ are also apart from one another. When the base plate 51c moves forward, as indicated by a phantom line in Figure 14, the guide roller 51q runs on to the guide member 52 so that the base plate 51c or the arms 51d₁, 51d₂ rotate around the axis X₁ counterclockwise as viewed from the right. Thus, the respective lower ends of the clamp plates 51j₁, 51j₂ are moved above the upper end of the supporting plate 53c of the leg support assembly 53. The base plate 51c of the peeler assembly 51 then moves further forward so that the clamp plates 51j₁, 51j₂ move forward beyond the supporting plate 53c of the support assembly 53.

When the piston 51a₁ of the air cylinder 51a reaches the advanced position, as indicated by a phantom line in Figure 14, the clamp plates 51j₁, 51j₂ reach the position to the rear of and close to the second clamping member 3e of the clamp assembly 3. Then, the guide roller 51q passes by the front end of the top plate 52a of the guide member 52 so that the guide roller 51q moves down. Thus, the base plate 51c or the arms 51d₁, 51d₂ rotate clockwise as viewed from the right until the shorter leg 51c₁ of the base plate 51c abuts against the stoppers 51b₁. After the rotation of the base plate 51c, the clamp plates 51j₁, 51j₂ are lowered to be close to the ankle S₃ of the leg S so that they can easily catch the ankle S₃ between the cutouts 51j₁' , 51j₂' .

The piston 51m₁ of the air cylinder 51m moves rightward from the advanced position to the retracted position so that the arms 51d₁, 51d₂ rotate so as to come close to one another at their front ends due to the biasing force of the spring 51f. Thus, the clamp plates 51j₁, 51j₂ come close to one another and, as shown in Figure 15, the V-shaped cutout 51j₁ ' partially overlaps the V-shaped cutout 51j₂' . Thus, the ankle S₃ of the leg S is clamped by the clamp plates 51j₁, 51j₂ at the cutting edges formed on the peripheries of the semicircular portions of the V-shaped cutouts 51j₁' , 51j₂' . The piston 51a₁ of the air cylinder 51a moves rearward from the advanced position to the retracted position so that the base plate 51c or the clamp plates 51j₁, 51j₂ move rearward. Thus, the meat around the lower leg bone S₁ is peeled off from the lower leg bone S₁ from the ankle S₃ toward the knee joint S₄ by the clamp plates 51j₁, 51j₂. The meat around the ankle S₃ has already been annularly cut apart by the ankle cutter 50 and the leg meat has already been cut open along the lower leg bone S₁ by the cutting machine B so that the meat around the lower leg bone S₁ is easily peeled off from the lower leg bone S₁ by the clamp plates 51j₁, 51j₂. The above peeling operation is easily carried out because the leg S is supported by the supporting plate 53c.

When the clamp plates 51j₁, 51j₂ reach the knee joint S₄, the peeling operation is completed. The piston 51m₁ of the air cylinder 51m moves leftward from the retracted position to the advanced position, and the arms 51d₁, 51d₂ rotate so as to be parted from one another at their front ends. Thus, the clamp plates 51j₁, 51j₂ are parted from one another and released from the leg S. The clamp plates 51j₁, 51j₂ move further rearward to return to the retracted positions as indicated by solid lines in Figures 12, 14. Though the clamp plates 51j₁, 51j₂ abut against the supporting plate 53c when they move rearward, the clamp plates 51j₁, 51j₂ can continue to move rearward because the supporting plate 53c rotates counterclockwise as viewed from the right and as indicated by a phantom line in Figure 14. The guide roller 51q rotates around the shaft 51p due to the guidance of the supporting plate 52b of the guide member 52 so that the guide roller 51q can move rearward.

After the clamp plates 51j₁, 51j₂ have reached the retracted positions as indicated by solid lines in Figures 12, 14, the upper run 2a of the endless chain 2 restarts its leftward movement, and the clamp assembly 3 moves leftward, while being kept in the closed condition, until it reaches the tendon cutting machine F.

### Tendon Cutting Machine F

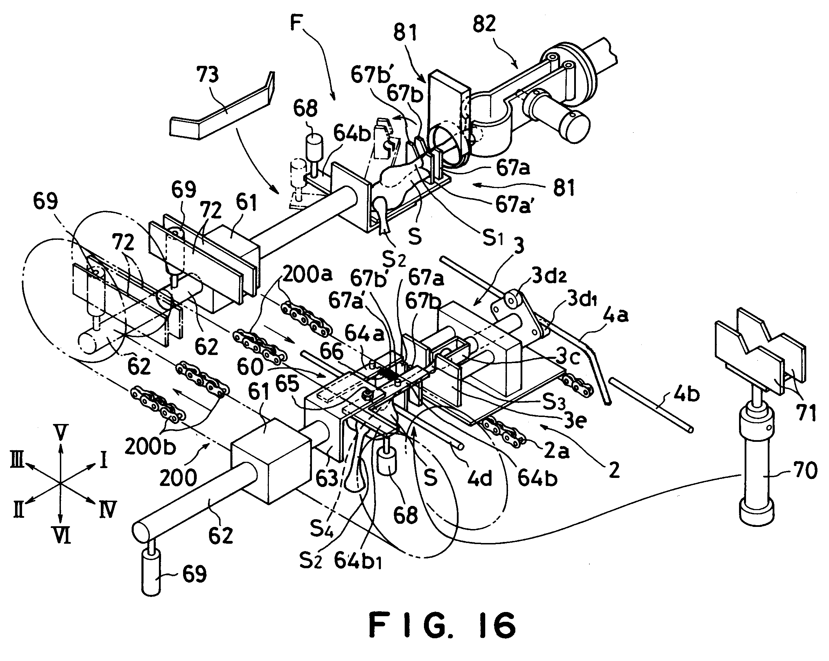

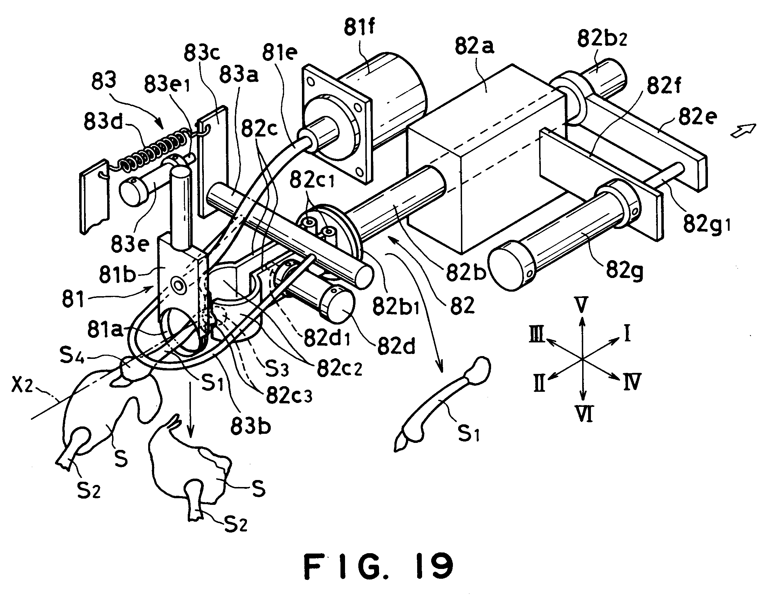

The tendon cutting machine F will be described with reference to Figures 16 to 21. In the following descriptions, the directions indicated by arrows I , II , III , IV , V and VI in Figures 16, 19 are referred to as the forward direction, rearward direction, leftward direction, rightward direction, upward direction and downward direction, respectively. Moreover, in the following descriptions, the direction parallel to the arrows I , II is referred to as the longitudinal direction, the direction parallel to the arrows III , IV is referred to as the transverse direction, and the direction parallel to the arrows V , VI is referred to as the vertical direction.

The tendon cutting machine F has a plurality of setting arm assemblies 60. The setting arm assemblies 60 are mounted on an endless chain 200 which is disposed to the rear of and above the clamp assembly 3 and extends in the transverse direction. A lower run 200b of the endless chain 200 moves leftward. The construction of the setting arm assemblies 60 will be described, with particular attention being paid to the setting arm assembly 60 on the lower run 200b of the endless chain 200.

The setting arm assembly 60 has a supporting block 61 which is fixed to the endless chain 200, a piston 62 which extends in the longitudinal direction through the supporting block 61, and a L-shaped member 63 which is fixed to the front end of the piston 62. As shown in Figure 16, when the setting arm assembly 60 is on the lower run 200a of the endless chain 200, the piston 62 is at the rearmost retracted position, that is the setting arm assembly 60 is at the retracted position. An arm 64a is fixed to the L-shaped member 63 and extends forward beyond the front end of the L-shaped member 63. An arm 64b is disposed adjacent to the arm 64a and connected to the L-shaped member 63 by a pin 65 which extends in the vertical direction. The arm 64b can rotate around the pin 65. The arm 64b extends forward beyond the front end of the L-shaped member 63. The arms 64a, 64b are biased by a spring 66 so as to be brought close to one another at their front ends.

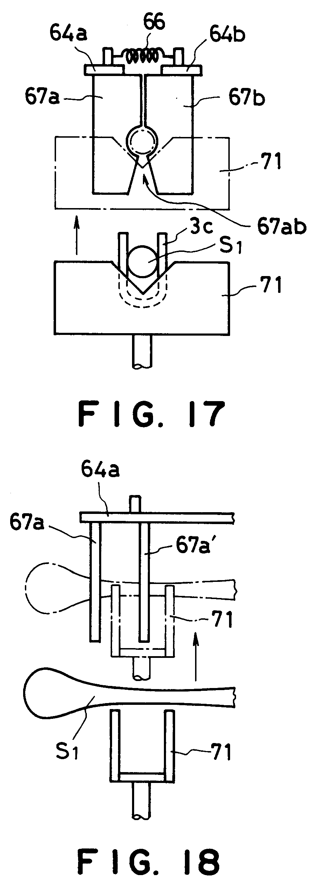

A pair of clamp plates 67a, 67b are fixed to the front ends of the arms 64a, 64b, respectively, and extend downward. The clamp plates 67a, 67b abut against one another at their upper portions due to the biasing force of the spring 66 so that their lower portions collaborate to form a V-shaped cutout 67ab. As shown in Figure 17, the V-shaped cutout 67ab includes a circular portion formed at the apex of the V-shape. A pair of clamp plates 67a' , 67b' which have the same constructions as those of the clamp plates 67a, 67b are fixed to the arms 64a, 64b, respectively. The clamp plates 67a ' , 67b' are disposed to the rear of and close to the clamp plates 67a, 67b. A rear end portion 64b₁ of the arm 64b is bent rightward and provided with a guide roller 68 at its right end. The piston 62 is provided with a guide roller 69 at its rear end. An air cylinder 70 is disposed in the vicinity of the right end of the lower run 200b of the endless chain 200 and below the clamp plates 67a, 67b, and 67a' , 67b' and extends upward. The air cylinder 70 is fixed to a frame of the tendon cutting machine F. The frame of the tendon cutting machine F is not illustrated for the sake of simplicity. A pair of supporting plates 71 which are disposed adjacent to one another in the longitudinal direction are fixed to the piston of the air cylinder 70. V-shaped cutouts are formed on the upper peripheries of the supporting plates 71, respectively.

A pair of clamp plates 72 for clamping the guide roller 69 of the setting arm assembly 60 are disposed in the vicinity of the left end of the upper run 200a of the endless chain 200 and above the endless chain 200. The clamp plates 72 are fixed to the piston of an air cylinder which is fixed to the frame of the tendon cutting machine F and extends forward. The air cylinder is not illustrated for the sake of simplicity. A guide plate 73 is disposed in the vicinity of the left end of the upper run 200a of the endless chain 200 and above the endless chain 200 and extends forward. The guide plate 73 is moved reciprocally between the retracted position shown in Figure 16 and the advanced position which is located to the right of and below the retracted position by a driving means which is not illustrated for the sake of simplicity.

The tendon cutting machine F has a cutter assembly 81 and a clamp assembly 82 which are disposed in the vicinity of the left end of and in front of the upper run 200a of the endless chain 200.

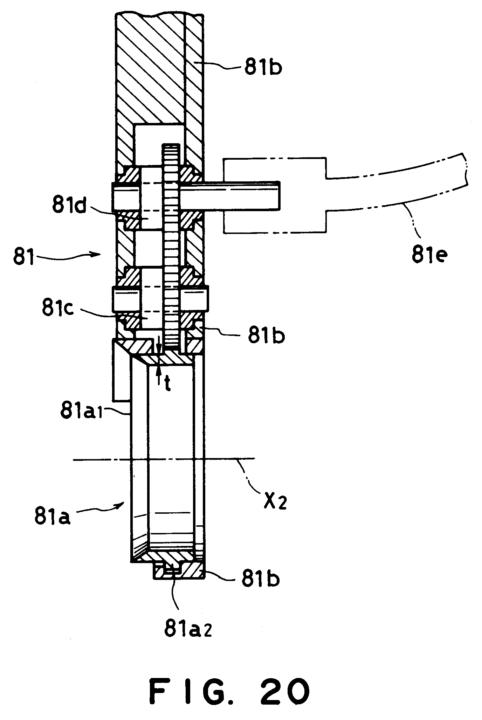

The cutter assembly 81 is fixed to the frame of the tendon cutting machine F. As shown in Figures 19 and 20, the cutter assembly 81 has an annular cutting blade 81a at its lower end, the central axis X₂ of which extends in the longitudinal direction.

The cutting blade 81a is provided with a cutting edge 81a₁ along its rear surface. The cutting edge 81a₁ is directed rearward. The cutting blade 81a is provided with teeth 81a₂ around its outer side surface. The cutting blade 81a has a sufficient thickness t so that it has a strong rigidity. The cutting blade 81a is rotatably supported around the central axis X₂ by a casing 81b which is fixed at its upper end to the frame of the tendon cutting machine F.

The portion of the casing 81b which receives the cutting blade 81a can be divided into a plurality of pieces so that the cutting blade 81a can be replaced.

An idling gear 81c is disposed above the cutting blade 81a. The idling gear 81c engages both the teeth 81a₂ and a driving gear 81d which is disposed above the idling gear 81c. The gears 81c and 81d are rotatably supported around their own axes by the casing 81b. The axes of gears 81c and 81d extend in the longitudinal direction.

The driving gear 81d is connected to a motor 81f by means of a flexible shaft 81e. Thus, the rotational force of the motor 81f is transmitted to the cutting blade 81a through the flexible shaft 81e, the driving gear 81d and the idling gear 81c, to cause the cutting blade 81a to rotate around the central axis X₂.

A clamp assembly 82 is disposed in front of the cutter assembly 81. The clamp assembly 82 is fixed to the frame of the tendon cutting machine F. As shown in Figure 19, the clamp assembly 82 has a rod 82b which extends in the longitudinal direction through a supporting box 82a. The rod 82b is supported by the supporting box 82a slidably in the longitudinal direction. The rod 82b is disposed coaxially with the central axis X₂ of the cutting blade 81a.

A pair of clamping arms 82c are disposed parallel to one another and extend in the longitudinal direction. Front ends 82c₁ of the clamping arms 82c are connected to a rear end 82b₁ of the rod 82b so as to swing around vertical axes. The clamping arms 82c are provided with curved portions 82c₂ at their rear ends. The curved portions 82c₂ are provided with opposed, semicircular cutouts 82c₃ at their rear ends. One of the arms 82c is provided with an air cylinder 82d directed in the transverse direction.

A piston 82d₁ of the air cylinder 82d extends through one of the arms 82c and is pivotally attached to the other one of the arms 82c. When the piston 82d₁ of the air cylinder 82d is at a retracted position, the clamping arms 82c are closed, as indicated by the solid line in Figure 19, and the cutouts 82c₃ are drawn close to one another. When the piston 82d₁ advances, the clamping arms 82c swing to an open position, and the cutouts 82c₃ are spaced apart from one another. A bracket 82e is connected to a front end portion 82b₂ of the rod 82b. The bracket 82e can not move in the longitudinal direction relative to the rod 82b.

The bracket 82e is connected to a piston 82g₁ of an air cylinder 82g which extends parallel to the rod 82b and is fixed to the supporting box 82a by a bracket 82f. When the piston 82g₁ of the air cylinder 82g is at a retracted position, the clamping arms 82c are at the initial position indicated by the solid line in Figure 19, and are close to the cutting blade 81a. When the piston 82g₁ of the air cylinder 82g advances, the rod 82b moves forward and thus the clamping arms 82c move to the working position, apart from the cutting blade 81a.

As shown in Figure 19, a biasing bar assembly 83 is disposed adjacent to the cutter assembly 81. The biasing bar assembly 83 has a shaft 83a which is disposed in front of the cutting blade 81a and extends in the transverse direction. The shaft 83a is rotatably supported around its transverse axis by the frame of the tendon cutting machine F. A horseshoe shape biasing bar 83b is fixed to the shaft 83a. The biasing bar 83b extends rearward beyond the cutting blade 81a to enclose the cutting blade 81a. The shaft 83a is fixed at its left end to the lower end of a plate 83c. The upper end of the plate 83c is biased rearward by a spring 83d. Thus, the shaft 83a is driven rotationally counterclockwise, as viewed from the right, by the spring 83d. An air cylinder 83e is disposed to the rear of the plate 83c. When a piston 83e₁ of the air cylinder 83e advances, it abuts against and pushes the plate 83c at a point in the middle of the height of the plate 83c so as to rotate the shaft 83a clockwise as viewed from the right against the biasing force of the spring 83d.

When the piston 83e₁ is at the advanced position, the rear end of the biasing bar 83b is above the cutting blade 81a. When the piston 83e₁ is at the retracted position, the rear end of the biasing bar 83b is forced below the cutting blade 81a due to the biasing force of the spring 83d. Thus the rear end of the biasing bar 83b moves reciprocally in the vertical direction after the air cylinder 83e is operated.

The operation of the tendon cutting machine F constructed as described above will be described hereinafter.

As shown in Figure 16, the clamp assembly 3 moves leftward after the upper run 2a of the endless chain 2 moves leftward until it reaches the position in the vicinity of the left end of the upper run 2a. The cam rollers 3d₂ of the clamp assembly 3 are disengaged from the line cam 4b. Then, the cam rollers 3d₁ engage the line cam 4a. Thus, the first clamping member 3c of the clamp assembly 3 rotates so that the open end of the U-shaped groove of the first clamping member 3c is directed upward. Thus, the clamp assembly 3 is opened. The ankle S₃ of the leg S is supported by the U-shaped groove of the first clamping member 3c and the U-shaped cutout 3e₁ of the second clamping member 3e. The knee joint S₄ of the leg S is supported by a supporting arm 4d which is disposed to the rear of the line cam 4a and extends in the transverse direction. The movement of the endless chain 200 is synchronized with the movement of the endless chain 2, so that the setting arm assembly 60 on the lower run 200b of the endless chain 200 is aligned with the clamp assembly 3 in the longitudinal direction. When the setting arm assembly 60 is aligned with the clamp assembly 3 in the longitudinal direction in the vicinity of the right end of the lower run 200b of the endless chain 200 or just above the air cylinder 70, the endless chains 2 and 200 are stopped.

The piston of the air cylinder 70 moves upward from the retracted position to the advanced position. As shown in Figures 17, 18, the supporting plate 71 moves upward from the retracted position indicated by a solid line to the advanced position indicated by a phantom line while it is supporting the lower leg bone S₁ of the leg S. Thus, the lower leg bone S₁ is released from the clamp assembly 3, and pushed into the V-shaped cutouts 67ab, 67ab' which are formed by the clamp plates 67a, 67b and 67a' , 67b' of the setting arm assembly 60. Then, the lower leg bone S₁ is clamped by the clamp plates 67a, 67b at the circular portions of the V-shaped cutouts 67ab, 67ab' . The endless chains 2 and 200 are restarted. Then, the upper run 2a of the endless chain 2 and the lower run 200b of the endless chain 200 reach left ends.

As indicated by a phantom line in Figure 16, the setting arm assembly 60 reaches the position in the vicinity of the left end of the upper run 200a of the endless chain 200. Then, the guide roller 69 of the setting arm assembly 60 is clamped by the pair of the clamp plates 72. The endless chain 200 then stops moving. Then, the piston of the air cylinder which is connected to the clamp plates 72 moves forward from the retracted position to the advanced position. Thus, the piston 62 of the setting arm assembly 60 moves forward from the retracted position indicated by a phantom line to the advanced position indicated by a solid line.

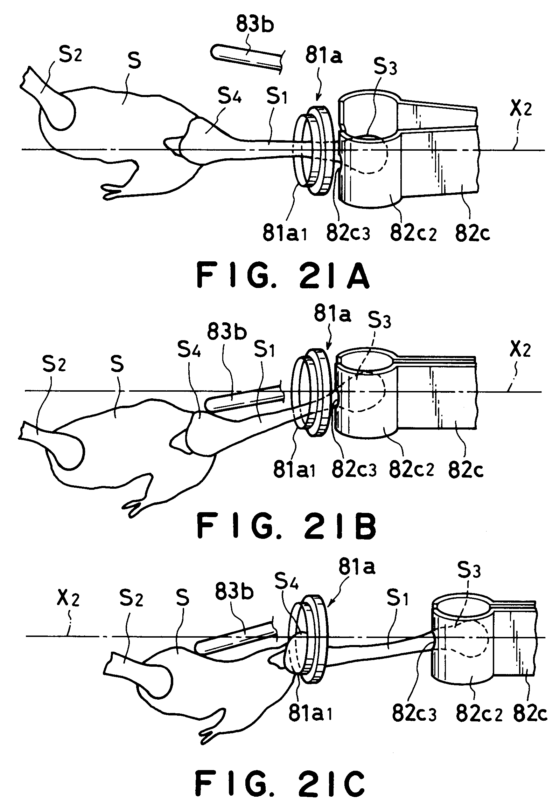

As a result, as shown in Figure 21A, the lower leg bone S₁, together with leg meat connected to the knee joint S₄ by meat-to-bone connecting tendon tissues, is passed through the cutting blade 81a from the rear side thereof toward the front side thereof, with the ankle S₃ being directed forward. The piston 82g₁ of the air cylinder 82g is at the retracted position, so that the clamping arms 82c are at the initial position wherein the clamping arms 82c are close to the cutting blade 81a. The piston 82d₁ of the air cylinder 82d is at the advanced position, so that the clamping arms 82c are at the open position. The piston 83e₁ of the air cylinder 83e is at the advanced position, so that the rear end of the biasing bar 83b of the biasing bar assembly 83 is above the cutting blade 81a. The motor 81f does not operate, so that the cutting blade 81a does not rotate.

As shown in Figure 21B, the piston 82d₁ retracts so as to close the clamping arms 82c. Thus, the portion of the lower leg bone S₁ adjacent to the ankle S₃ is clamped by the clamping arms 82c at the closely-opposed cutouts 82c₃. The piston 83e₁ of the air cylinder 83e retracts so as to move the rear end of the biasing bar 83b of the biasing bar assembly 83 downward. Thus, the lower leg bone S₁ is pushed against the cutting edge 81a₁ of the cutting blade 81a. The motor 81f is started so as to rotate the cutting blade 81a. When the clamping arms 82c are closed and the portion of the lower leg bone S₁ adjacent to the ankle S₃ is clamped by the clamping arms 82c at the closely-opposed cutouts 82c₃, as shown in Figure 16, the guide plate 73 moves from the retracted position to the advanced position, so that the guide plate 73 abuts against the guide roller 68 of the setting arm assembly 60 and, as indicated by a phantom line in Figure 16, pushes the guide roller 68 rightward. Thus, as indicated by a phantom line in Figure 16, the arm 64b of the setting arm assembly 60 rotates around the pin 65 so that the clamp plates 67b, 67b' move away from the clamp plates 67a, 67a' . As a result, the leg S is released from the clamp plates 67a, 67b and 67a' , 67b' of the setting arm assembly 60.

As shown in Figure 21C, the piston 82g₁ of the air cylinder 82g advances so as to move the clamping arms 82c forward to the working position. Thus, the lower leg bone S₁ clamped by the clamping arms 82c moves forward through the cutting blade 81a. As leg meat moves forward, it is pushed downward by the biasing bar 83b. Thus, the lower portion of the knee joint S₄ is pressed against the cutting edge 81a₁ of the cutting blade 81a, so that the meat-to-bone connecting tendon tissues which connect the leg meat to the knee joint S₄ are cut off the knee joint S₄. As a result, the leg meat is removed from the lower leg bone S₁.

The leg meat which is removed from the lower leg bone S₁ falls into a collecting box ( not shown ). When the clamping arm 82c has reached the working position, the motor 81f is stopped, and then the piston 82d₁ of the air cylinder 82d advances so as to open the clamping arms 82c. Thus, the lower leg bone S₁, which has now been removed from the leg meat, falls into another collecting box ( not shown ). Then, the piston 82g₁ of the air cylinder 82g retracts so as to move the clamping arms 82c rearward back to the initial position.

After the leg S is released, the setting arm assembly 60 moves back to the retracted position as indicated by a phantom line in Figure 16. After the setting arm assembly 60 returns back to the retracted position, the guide plate 73 returns back to the retracted position so that the clamp plates 67b, 67b' come close to the clamp plates 67a, 67a' again.

After the leg meat is received in the collecting box, the upper leg bone S₂ is manually removed from the leg meat. Thus, the boning work is finished.

As clearly understood from the above description of the tendon cutting machine F, the meat-to-bone connecting tendon tissues which connect the leg meat to the knee joint S₄ are cut off the knee joint S₄ by the annular cutting blade 81a. The cutting blade 81a has a strong rigidity and rotates around the axis x₂, and the knee joint S₄ is biased against the cutting edge 81a₁ of the blade 81a.

Thus, as opposed to the conventional manual boning process performed with a knife, the cutting edge 81a₁ of the present invention can be stably abutted against the meat-to-bone connecting tendon tissues during the cutting operation. Thus, the boning work can be safely performed and the cut surface of the leg meat can be made smooth, which increases the commercial value of the leg meat. Further, the knee joint S₄ is biased against the cutting edge 81a₁, so that the meat-to-bone connecting tendon tissues are cut in the vicinity of the knee joint S₄. Thus, the leg meat removed from the lower leg bone S₁ has a high yield. The biasing force can be controlled by controlling the spring constant of the spring 83d.

The operations of the machines A to F are controlled by a sequence controller.

A plurality of each of the machines B to F may be disposed parallel to the endless chain 2, so that a plurality of the legs S can be treated at the same time.

While the present invention has been described with reference to the preferred embodiments, one of ordinary skill in the art will recognize that modifications and improvements may be made while remaining within the spirit and scope of the present invention. The scope of the invention is determined solely by the appended claims.

## Claims

1. A poultry leg boning apparatus for removing meat from the upper and lower leg bones of a poultry leg, which comprises:
(a) a transferring machine for transferring a poultry leg, including:
first clamping means for clamping the ankle of the leg while allowing the leg to rotate around the ankle, which first clamping means has a first clamping member having a groove, a second clamping member disposed adjacent to the first clamping member, which second clamping member is provided with a cutout facing the groove of the first clamping member, the breadth of the cutout being smaller than that of the groove of the first clamping member, and means for rotating the first clamping member relative to the second clamping member between a first position wherein the open end of the groove of the first clamping member is directed in the same direction as the open end of the cutout of the second clamping member and a second position wherein the open end of the groove of the first clamping member is directed at right angles to the open end of the cutout of the second clamping member; and
first driving means for horizontally moving the first clamping means ;
(b) a cutting machine for cutting open the meat of the poultry leg along one side of the upper leg bone and the lower leg bone, including:
first supporting means for supporting the leg;
meat cutting means for cutting open the meat of the leg, which meat cutting means has a first cutting blade having a wedge-shaped horizontal cross section and a vertical cutting edge, a second cutting blade abutting against a first side of the cutting edge of the first cutting blade and slightly protruding from the cutting edge of the first cutting blade, and second driving means for reciprocating the second cutting blade in the vertical direction relative to the first cutting blade;
first biasing means for biasing the leg against a second side of the cutting edge of the first cutting blade;
third driving means for moving the meat cutting means in the vertical direction into and out of engagement with the meat of the leg;
fourth driving means for horizontally moving the meat cutting means; and
restricting means for restricting rotation of the meat cutting means around a vertical axis when a force directed to the cutting edge of the first cutting blade is smaller than a predetermined magnitude, and permitting the rotation of the meat cutting means around the vertical axis when a force directed to the cutting edge of the first cutting blade is larger than the predetermined magnitude, which restricting means has a vertical shaft member fixed to the meat cutting means, which vertical shaft member is offset in a direction at right angles to the direction of the horizontal movement of the meat cutting means relative to the first and the second cutting blades, spring means for applying a predetermined initial moment to the meat cutting means, thereby driving the meat cutting means rotationally around the vertical axis of the shaft member, and stopper means for restricting the rotation of the meat cutting means by the initial moment;
(c) a separating machine for cutting the knee joint of the poultry leg apart thereby separating the upper leg bone from the lower leg bone, including:
a third cutting blade the cutting edge of which is sharp at one end portion thereof and dull at the other end portion thereof, which third cutting blade swings around the other end portion;
second supporting means for supporting the knee joint of the leg, which second supporting means extends below and parallel to the third cutting blade; and
bending means for engaging with the upper leg bone so as to bend it downward;
(d) a plucking machine for pulling up the upper leg bone at the knee joint and plucking out the upper leg bone from the meat of the poultry leg, including:
a plow member which has a fork shaped tip;
fifth driving means for moving the plow member obliquely downward so as to engage the fork shaped tip with the knee joint of the leg; and
swinging means for swinging the plow member which is engaged with the knee joint downward;
(e) a peeling machine for peeling the meat off the poultry leg along the lower leg bone toward the knee joint so that the meat is connected to the knee joint only by meat-to-bone connecting tendon tissues, including:
ankle cutting means for annularly cutting the meat around the ankle of the leg, which ankle cutting means has a pair of rotating fourth circular cutting blades biased to come close to one another and sixth driving means for moving the fourth cutting blades in the vertical direction into and out of engagement with the ankle of the leg;
a pair of fifth cutting blades which have cutouts opposed to one another;
seventh driving means for moving the fifth cutting blades close to and apart from one another; and
eighth driving means for moving the fifth cutting blades reciprocally along the lower leg bone; and
(f) a tendon cutting machine for cutting the meat-to-bone connecting tendon tissues to be able to remove the lower leg bone from the poultry leg, including:
tendon cutting means for cutting the meat-to-bone connecting tendon tissues, which tendon cutting means has a sixth rigid annular cutting blade having an annular cutting edge and a side away from the cutting edge and ninth driving means for rotating the sixth cutting blade around a central axis;
second clamping means for clamping the lower leg bone, which second clamping means is disposed apart from the sixth cutting blade toward the side of the cutting edge of the sixth cutting blade;
transferring means for transferring the leg from the first clamping means to the second clamping means;
tenth driving means for moving the second clamping means both close to and apart from the sixth cutting blade;
third clamping means for clamping the ankle of the leg, which third clamping means is disposed coaxially with the central axis of the sixth cutting blade, and apart from the sixth cutting blade toward the side away from the cutting edge of the sixth cutting blade;
eleventh driving means for moving the third clamping means both close to and apart from the sixth cutting blade; and
second biasing means for biasing the knee joint of the leg against the cutting edge of the sixth cutting blade.

2. A poultry leg boning apparatus of claim 1, which further comprises:
guiding means for guiding the first cutting blade and the second cutting blade so as to engage them with the leg at a predetermined portion of the leg.

3. A poultry leg boning apparatus of any one of the preceding claims, which further comprises:
means for revolving the third cutting blade.

4. A poultry leg boning apparatus of any one of the preceding claims, which further comprises:
twelfth driving means for moving the second supporting means parallel to the third cutting blade.

5. A poultry leg boning apparatus of any one of the preceding claims, which further comprises:
means for roughly aligning the knee joint of the leg with the cutting edge of the third cutting blade, which means has a pair of rotating conical rollers so disposed that their slanted sides are opposed to one another.

6. A poultry leg boning apparatus of any one of the preceding claims, which further comprises:
means for moving the fifth cutting blades downward close to the lower leg bone adjacent to the ankle.

7. A poultry leg boning apparatus of any one of the preceding claims, which further comprises:
third supporting means for supporting the leg, which supporting means can be engaged with the fifth cutting blades and rotated by the fifth cutting blades.

8. A separating machine for cutting the knee joint of a poultry leg apart thereby separating the upper leg bone from the lower leg bone, which comprises:
a cutting blade the cutting edge of which is sharp at one end portion thereof and dull at the other end portion thereof, which cutting blade swings around the other end portion;
supporting means for supporting the knee joint of the leg, which supporting means extends below and parallel to the cutting blade;
bending means for engaging with the upper leg bone so as to bend it downward;
clamping means for clamping the ankle of the leg;
and
driving means for moving the clamping means parallel to the cutting blade.

9. A separating machine of claim 8, wherein the clamping means for clamping the ankle of the leg includes:
a first clamping member having a groove;
a second clamping member disposed adjacent to the first clamping member, which second clamping member is provided with a cutout facing the groove of the first clamping member, the breadth of the cutout being smaller than that of the groove of the first clamping member; and
means for rotating the first clamping member relative to the second clamping member between a first position wherein the open end of the groove of the first clamping member is directed in the same direction as the open end of the cutout of the second clamping member and a second position wherein the open end of the groove of the first clamping member is directed at right angles to the open end of the cutout of the second clamping member.

10. A separating machine of claims 8 or 9, which further comprises:
means for revolving the cutting blade.

11. A separating machine of any one of the claims 8 to 10, which further comprises:
driving means for moving the supporting means parallel to the cutting blade.

12. A separating machine of any one of the claims 8 to 11, which further comprises:
means for roughly aligning the knee joint of the leg with the cutting edge of the cutting blade, which means has a pair of rotating conical rollers so disposed that their slanted sides are opposed to one another.
